# EUROPEAN PATENT SPECIFICATION

(11) **EP 2 221 351 B1**
(45) Date of publication and mention of the grant of the patent: **10.12.2014**
(21) Application number: 10000487.8
(22) Date of filing: 19.01.2010
(51) Int. Cl.: C09D 11/00

(54) **Ink set for inkjet recording and image recording method**
Tintensatz zur Tintenstrahlaufzeichnung und Bildaufzeichnungsverfahren
Jeu d'encre pour une impression à jet d'encre et procédé d'impression d'images

(30) Priority: 20.02.2009 JP 2009037982
(43) Date of publication of application: 25.08.2010
(73) Proprietor: FUJIFILM Corporation, Minato-ku Tokyo (JP)
(72) Inventor: Shibata, Naoya, Ashigarakami-gun (JP)
(74) Representative: Hoffmann Eitle

(56) References cited:
- EP-A1- 2 003 176
- EP-A1- 2 075 269
- EP-A1- 2 090 624
- EP-A1- 2 105 317
- EP-A1- 2 105 473
- US-A1- 2006 197 814
- US-A1- 2006 203 055
- US-A1- 2008 006 176

## Description

### BACKGROUND OF THE INVENTION

### [Field of the Invention]

The present invention relates to an ink set for inkjet recording, and an image recording method using the ink set.

### [Description of the Related Art]

Various recording media for inkjet recording have been studied, and techniques for forming high-quality images are in demand. Further, for inks for inkjet recording, coloring materials such as pigments have been studied as ink materials having water resistance and light resistance.

When recording on plain paper, however, there are cases when sufficient performance is not achieved in terms of color density, fixing property, and resolution. This is particularly the case in, for example, high speed inkjet recording. Therefore, suitable performance for recording is being sought in high speed recording conducted not by a shuttle scanning system but a single pass system wherein recording is achieved in a single head operation.

In order to achieve objectives such as high fixing property, enlargement of the color reproducible range of a secondary color, sufficient optical density in high speed printing, and prevention of bleeding when an image is formed on various recording media, a method has been proposed in which two liquids are used including a first liquid containing pigment particles and a second liquid containing a liquid composition for improving printability (see, for example, Japanese Patent Application Laid-Open (JP-A) No. 2007-261206). In this method, the above-described objects can be achieved through appropriate control of the particle diameter of the pigment contained in the first liquid; specifically, appropriate control of the content amount of pigment particles having a particle diameter of 150 nm or more.

### SUMMARY OF THE INVENTION

The invention provides an ink set for inkjet recording and an image recording method using the ink set, and the ink set being capable of forming, by using an aged ink, a high-resolution image that is free from white spots and is excellent in rub resistance. More specifically, according to an aspect of the invention, an ink set for inkjet recording including an aqueous ink composition containing a pigment coated with a water-insoluble resin that is a resin of a copolymer containing a repeating unit having an acid group and has a neutralization degree of from 70% to 95%, an organic solvent and water, and an aqueous liquid composition containing an acid that aggregates the pigment in the aqueous ink composition when the aqueous liquid composition is mixed with the aqueous ink composition; and an image recording method using the ink set are provided.

### DETAILED DESCRIPTION OF THE INVENTION

The inventor found that, even in the foregoing method, it is hard to realize formation of a recorded high definition image in which generation of white spots is suppressed and sufficient rub resistance is achieved by using an aged ink.
The present invention has been made in view of the above circumstances. The inventor studied hard and found an ink set for inkjet recording, which is capable of forming a high-resolution image having an excellent rub resistance and suppressing white spots from being developed, by using aged ink, and an image recording method using the ink set, with the following items <1> to <15>.
<1> An ink set for inkjet recording, including: an aqueous ink composition comprising a pigment, an organic solvent, and water, the pigment being coated with a water-insoluble resin which is a copolymer, the water-insoluble resin having a neutralization degree of from 70% to 95%, and the copolymer containing a repeating unit having an acid group; and an aqueous liquid composition comprising an acid, the acid aggregating the pigment in the aqueous ink composition when the aqueous liquid composition is mixed with the aqueous ink composition.
<2> The ink set for inkjet recording according to the item <1>, wherein the water-insoluble resin has an acid value of from 30 mgKOH/g to 100 mgKOH/g.
<3> The ink set for inkjet recording according to the item <1> or the item <2>, wherein the water-insoluble resin contains a hydrophilic structural unit (A) and a hydrophobic structural unit (B), at least one kind of the hydrophobic structural unit (B) is a structural unit containing an aromatic ring, and the hydrophilic structural unit (A) contains at least a structural unit derived from an acid group-containing monomer.
<4> The ink set for inkjet recording according to the item <3>, wherein the hydrophobic structural unit (B) comprises a repeating unit represented by the following Formula (1): 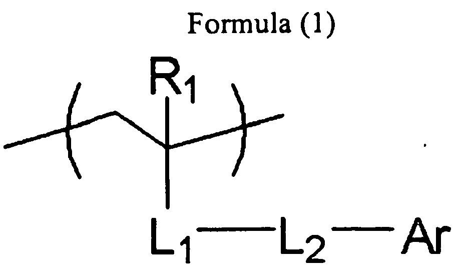 wherein, in Formula (1), R₁ represents a hydrogen atom or a methyl group; L₁ represents an unsubstituted or substituted phenylene group; L₂ represents a single bond or a divalent linking group; and Ar represents a monovalent group derived from a condensed aromatic ring having 8 or more carbon atoms, a heterocycle having an aromatic ring condensed therein, or two or more benzene rings linked to each other.
<5> The ink set for inkjet recording according to the item <3>, wherein the hydrophobic structural unit (B) comprises a repeating unit represented by the following Formula (I): 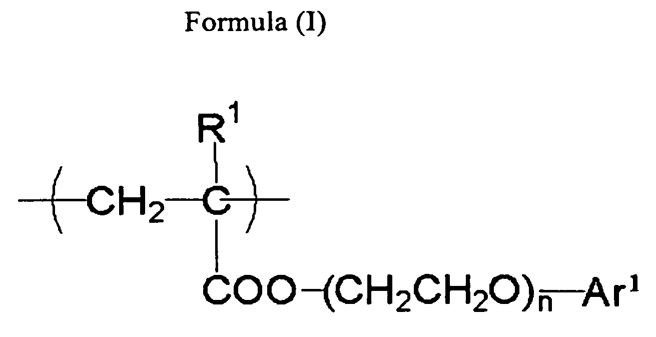 wherein, in Formula (I), R¹ represents a hydrogen atom or a methyl group; Ar¹ represents a monovalent group derived from an unsubstituted or substituted aromatic ring; and n represents an average repeating number and denotes an integer of 1 to 6.
<6> The ink set for inkjet recording according to any one of the items <3> to <5>, wherein the acid group-containing monomer is one selected from the group consisting of an unsaturated carboxylic acid monomer, an unsaturated sulfonic acid monomer, and an unsaturated phosphoric acid monomer.
<7> The ink set for inkjet recording according to any one of the items <3> to <5>, wherein the acid group-containing monomer is a (meth)acrylic acid.
<8> The ink set for inkjet recording according to any one of the items <1> to <7>, wherein the aqueous ink composition further includes resin particles.
<9> The ink set for inkjet recording according to the item <8>, wherein the resin particles are particles in a state of latex selected from the group consisting of acryl latex, vinyl acetate latex, styrene latex, and polyester latex.
<10> The ink set for inkjet recording according to the item <8>, wherein the resin particles are particles in a state of acryl latex.
<11> The ink set for inkjet recording according to any one of the items <8> to <10>, wherein the resin particles are self-dispersing polymer particles.
<12> The ink set for inkjet recording according to any one of the items <1> to <11>, wherein the pH of the aqueous ink composition at 25°C is 7.5 or higher, and the pH of the aqueous liquid composition at 25°C is 4 or lower.
<13> The ink set for inkjet recording according to any one of the items <1> to <12>, wherein the aqueous liquid composition comprises an organic carboxylic acid that serves as the acid aggregating the pigment.
<14> An image recording method including: applying an aqueous ink composition on a recording medium by an inkjet recording process, the aqueous ink composition including a pigment, an organic solvent, and water, the pigment being coated with a water-insoluble resin which is a copolymer, the water-insoluble resin having a neutralization degree of from 70% to 95%, and the copolymer containing a repeating unit having an acid group; applying an aqueous liquid composition serving as an aggregating component on the recording medium, the aqueous liquid composition comprising an acid aggregating the pigment in the aqueous ink composition when the aqueous liquid composition is mixed with the aqueous ink composition; and forming an image by allowing the aqueous ink composition and the aqueous liquid composition to come in contact with each other.
<15> The image recording method according to the item <14>, wherein, after the aqueous liquid composition is applied, an image is formed by applying the aqueous ink composition in a manner such that the aqueous ink composition comes in contact with the aqueous liquid composition applied on the recording medium.

The ink set for inkjet recording according to the present invention and the image recording method using the ink set will be described in detail below.

### <Ink set for inkjet recording>

The ink set for inkjet recording according to the present invention contains an aqueous ink composition and an aqueous liquid composition, forming an image by aggregation when the aqueous ink composition and the aqueous liquid composition come in contact with each other. In one aspect of the ink set, the aqueous ink composition and the aqueous liquid composition, each may be included one kind, or in another aspect, either or both of them may be included two or more kinds.

### (Aqueous ink composition)

The aqueous ink composition of the ink set for inkjet recording according to the present invention contains a pigment (hereinafter, also referred to as "resin-coated pigment") coated with a water-insoluble resin, an organic solvent, and water. The water-soluble resin has a neutralization degree of from 70% to 95% and is a resin of a copolymer containing a repeating unit having an acid group. Further, preferably resin particles, and if necessary, other components such as a surfactant are allowed to be incorporated therein.

In the present invention, a pigment that is incorporated as a coloring agent is allowed to exist in an ink liquid while the pigment is coated with a water-insoluble resin described later, thereby reducing, on a liquid ejection portion, adhesion and deposition of an aggregate that is formed when the two liquids of aqueous ink composition and aqueous liquid composition scatter, come in contact with each other, and aggregate upon recording, and making easy the removal of the aggregate when the aggregate adheres onto the liquid ejection portion. As a result, the maintenance frequency of an ejection apparatus is reduced and maintenance properties thereof are improved. In addition to that, directional failure of ink ejection is suppressed when an ink is ejected, and generation of white spots is prevented. Furthermore, the resolution of an image having excellent rub resistance is allowed to be enhanced.

### <Pigment coated with water-insoluble resin>

The ink composition of the present invention contains at least one kind of a pigment coated with a water-insoluble resin (hereinafter, also referred to as a water-insoluble resin of the present invention) that is a copolymer containing a repeating unit having an acid group and has a neutralization degree of from 70% to 95%. Owing to this, the ink composition of the present invention is excellent in dispersion stability.
Specific aspects of the pigment in the present invention are not particularly limited as long as the embodiments are characterized by coating the pigment partly or wholly with the water-insoluble resin of the present invention.

In addition, the water-insoluble resin of the present invention has a neutralization degree of from 70% to 95%. When the neutralization degree is less than 70%, white spots develop in an image, and when it goes over 95%, rub resistance is deteriorated.
By adjusting the neutralization degree within the above range, development of white spots in an image is effectively suppressed and rub resistance is effectively improved.
The neutralization degree is preferably from 70% to 90% and particularly preferably from 75% to 90%.
The neutralization degree used in the present invention is an equivalence ratio (%) of a neutralizer (neutralizing agent) with respect to one equivalent of the acid group. Namely, the neutralization degree of the water-insoluble resin is defined as a ratio of the total equivalence of the neutralizer to the total equivalence of the acid group contained in the water-insoluble resin, and is obtained in accordance with the following equation.
Neutralization degree of water-insoluble resin = (total equivalence of neutralizer)/total equivalence of acid group in water-insoluble resin) × 100 (%)

The water-insoluble resin of the present invention contains a repeating unit having an acid group. The repeating unit having the acid group is preferably incorporated in the following hydrophilic structural unit (A).

The water-insoluble resin of the present invention is allowed to exist stably in an aqueous ink and is preferably a resin that is composed of a hydrophilic structural unit (A) and a hydrophobic structural unit (B) from the viewpoint of reducing adhesion and deposition of aggregate and making easy the removal of adhered aggregate.

### <Hydrophilic structural unit (A)>

The hydrophilic structural unit (A) includes at least one kind of repeating unit that has an acid group and is derived from an acid group-containing monomer. The repeating unit that has an acid group may be derived from an acid group containing monomer or a repeating unit having no acid group (a polymer chain after polymerization) to which an acid group is incorporated later.

The acid group is not particularly limited and may include, from the viewpoint of stability of the emulsion state or dispersion state, a carboxy group, a phosphoric acid group, and a sulfonic acid group. Among these, a carboxy group is preferable from the viewpoint of dispersion stability in an ink composition.

As the acid group containing monomer, an acid group containing monomer having an acid group and an ethylenically unsaturated bond is preferable. Examples of the acid group containing monomer may include an unsaturated carboxylic acid monomer, an unsaturated sulfonic acid monomer, and an unsaturated phosphoric acid monomer.
Examples of the unsaturated carboxylic monomer may include acrylic acid, methacrylic acid, crotonic acid, itaconic acid, maleic acid, fumaric acid, citraconic acid, and 2-methacryloyloxymethyl succinic acid. Examples of the unsaturated sulfonic acid monomer may include styrenesulfonic acid, 2-acrylamido-2-methylpropanesulfonic acid, 3-sulfopropyl (meth)acrylate, and bis(3-sulfopropyl) itaconate. Examples of the unsaturated phosphoric acid monomer may include vinylphosphonic acid, vinyl phosphate, bis(methacryloxyethyl) phosphate, diphenyl-2-acryloyloxyethyl phosphate, diphenyl-2-methacryloyloxyethyl phosphate, and dibutyl-2-acryloyloxyethyl phosphate.
Among the acid group containing monomers, from the viewpoint of dispersion stability and ejection stability, an unsaturated carboxylic monomer is preferable, and acrylic acid and methacrylic acid are more preferable. Specifically, the repeating unit having an acid group is preferably a structural unit derived from (meth)acrylic acid.
In the water-insoluble resin, either or both of a structural unit derived from acrylic acid and a structural unit derived from methacrylic acid are preferably incorporated.

As the hydrophilic structural unit (A) besides the above, there may be mentioned a structural unit that is derived from a monomer having a nonionic hydrophilic group. Examples thereof may include vinyl monomers having a hydrophilic functional group such as (meth)acrylates, (meth)acrylamides, or vinylesters that have a hydrophilic functional group.

The "hydrophilic functional group" may include a hydroxy group, an amino group, an amido group (the nitrogen atom thereof is not substituted), and alkylene oxide such as polyethylene oxide or polypropylene oxide that is described later.

The monomer that forms the hydrophilic structural unit having a nonionic hydrophilic group is not particularly limited and may be selected from known monomers, as long as the monomer has a functional group capable of forming a polymer such as an ethylenically unsaturated bond and a nonionic hydrophilic functional group. Preferable specific examples of the monomer may include hydroxylethyl (meth)acrylate, hydroxybutyl (meth)acrylate, (meth)acrylamide, aminoethyl acrylate, aminopropyl acrylate, and (meth)acrylate that contains an alkyleneoxide polymer.

The hydrophilic structural unit (A) having a nonionic hydrophilic group may be formed by polymerization of corresponding monomers, but may be formed by introducing a hydrophilic functional group into a polymer chain after polymerization.

As the hydrophilic structural unit having a nonionic hydrophilic group, a hydrophilic structural unit having an alkylene oxide structure is more preferable. As the alkylene moiety of the alkylene oxide structure, from the viewpoint of hydrophilicity, an alkylene moiety having 1 to 6 carbon atoms is preferable, an alkylene moiety having 2 to 6 carbon atoms is more preferable, and an alkylene moiety having 2 to 4 carbon atoms is particularly preferable. The polymerization degree of the alkylene oxide structure is preferably 1 to 120, more preferably 1 to 60, and particularly preferably 1 to 30.

In a preferable embodiment, the hydrophilic structural unit having a nonionic hydrophilic group is a hydroxyl group-containing hydrophilic structural unit. The number of hydroxy groups in the structural unit is not particularly limited and is preferably 1 to 4, more preferably 1 to 3, and still more preferably 1 or 2, from the viewpoint of the hydrophilicity of the water-insoluble resin and compatibility with a solvent and other monomers at the time of polymerization.

In the foregoing description, the content of the hydrophilic structural unit varies, for example, depending on the ratio of the hydrophobic structural unit (B) described later. For example, when the water-insoluble resin is composed of acrylic acid and/or methacrylic acid (hydrophilic structural unit (A)) and the hydrophobic structural unit (B) described later, the content of acrylic acid and/or methacrylic acid is determined by "100 - (% by mass of the hydrophobic structural unit)".
The hydrophilic structural units (A) may be used alone or as a mixture of two or more of them.

### <Hydrophobic structural unit (B)>

The water-insoluble resin of the present invention preferably contains a hydrophilic structural units (A) and a hydrophobic structural unit (B), and at least one kind of the hydrophobic structural unit (B) is preferably a structural unit having an aromatic ring. In addition, the hydrophobic structural unit (B) preferably has a repeating unit represented by the following Formula (1).

### < Repeating unit represented by Formula (1)>

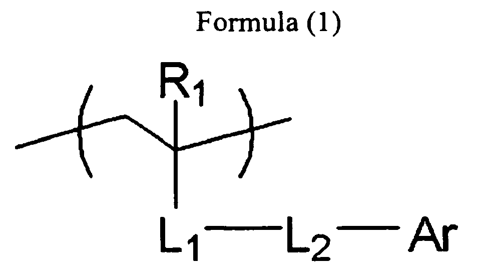

In Formula (1), R₁ represents a hydrogen atom or a methyl group. L₁ represents an unsubstituted or substituted phenylene group. L₂ represents a single bond or a divalent linking group. Ar represents a monovalent group derived from a condensed aromatic ring having 8 or more carbon atoms, a heterocycle having an aromatic ring condensed therein, or two or more benzene rings linked to each other.

In Formula (1), R₁ represents a hydrogen atom or a methyl group, and preferably a methyl group.

L₁ represents an unsubstituted or substituted phenylene group. An unsubstituted phenylene group is preferable as L₁. L₂ represents a single bond or a divalent linking group. The divalent linking group is preferably a linking group having 1 to 30 carbon atoms, more preferably a linking group having 1 to 25 carbon atoms, even more preferably a linking group having 1 to 20 carbon atoms, and particularly preferably a linking group having 1 to 15 carbon atoms. Particularly preferable examples of the linking group include an alkyleneoxy group having 1 to 25 carbon atoms (more preferably 1 to 10 carbon atoms), an imino group (-NH-), a sulfamoyl group, a divalent linking group including an alkylene group such as an alkylene group having 1 to 20 carbon atoms (more preferably 1 to 15 carbon atoms) or an ethylene oxide group [-(CH₂CH₂O)ₙ-, n = 1 to 6], and a combination of two or more thereof.

Ar represents a monovalent group derived from a condensed aromatic ring having 8 or more carbon atoms, a heterocycle having an aromatic ring condensed therein, or two or more benzene rings linked to each other.

The "condensed aromatic ring having 8 or more carbon atoms" may be an aromatic ring having two or more benzene rings condensed therein or an aromatic ring having 8 or more carbon atoms composed of at least one aromatic ring and a ring formed by an alicyclic hydrocarbon condensed with the aromatic ring. Specific examples include naphthalene, anthracene, fluorene, phenanthrene, and acenaphthene.

The "heterocycle having an aromatic ring condensed therein" is a compound consisting of a heteroatom-free aromatic compound (preferably a benzene ring) and a heteroatom-containing cyclic compound condensed with each other. The heteroatom-containing cyclic compound is preferably a five- or six-membered ring. The heteroatom is preferably a nitrogen atom, an oxygen atom or a sulfur atom. The heteroatom-containing cyclic compound may have a plurality of heteroatoms. In this case, the heteroatoms may be the same as or different from each other. Specific examples of the heterocycle having an aromatic ring condensed therein include phthalimide, acridone, carbazole, benzoxazole, and benzothiazole.

Specific examples of monomers that forms the repeating unit represented by Formula
(1) include the following monomers. The present invention is not limited to these monomers. 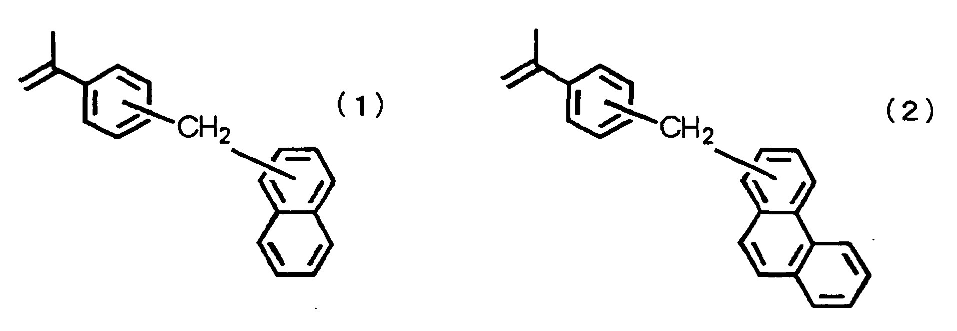 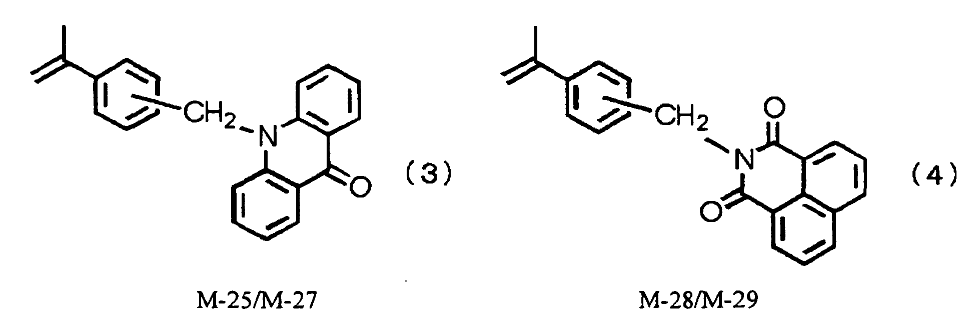
M-25/M-27 represents a mixture of monomers M-25 and M-27, each of which has the substituent at m- or p- position.
M-28/M-29 represents a mixture of monomers M-28 and M-29, each of which has the substituent at m- or p- position.

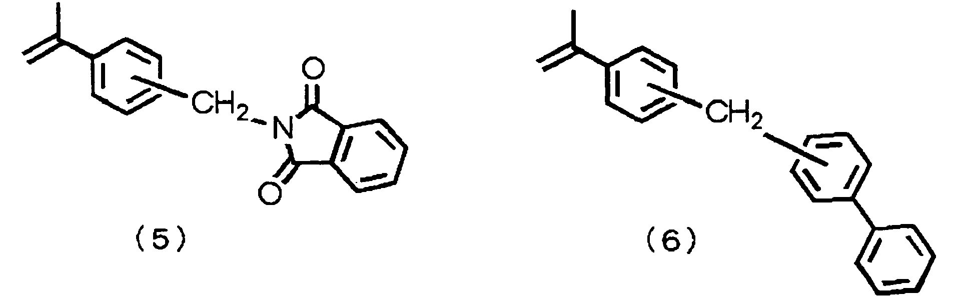

Ar in the repeating unit represented by the foregoing Formula (1) is preferably a monovalent group derived from acridone or phthalimide from the viewpoint of the stability of the coated pigment, and more preferably a monovalent group derived from acridone.
As the repeating unit represented by Formula (1), from the viewpoint of dispersion stability of the pigment, a repeating unit that is specified by selecting an unsubstituted phenylene group as L₁, a divalent linking group (preferably methylene) as L₂, and a monovalent group derived from acridone as Ar is preferable.

The content of the repeating unit represented by Formula (1) in the copolymer is preferably in the range of from 5% by mass to 25% by mass, with respect to the total mass of the copolymer, and more preferably in the range of from 10% by mass to 18% by mass.
When the content is 5% by mass or more, generation of image defects such as white spots tends to be suppressed markedly desirably, on the other hand, when the content is 25% by mass or less, problems of production suitability caused by lowering the solubility of the copolymer in a polymerization reaction liquid (for example, methyl ethyl ketone) tend not to be brought about desirably.

In a preferred embodiment, the water-insoluble resin of the present invention has a repeating unit represented by the following Formula (I) other than the repeating unit represented by Formula (1).

### <Repeating unit represented by Formula (I)>

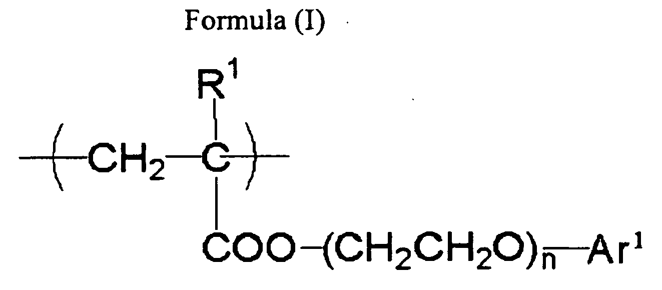

In Formula (I), R¹ represents a hydrogen atom or a methyl group, and preferably a methyl group.

Ar¹ represents a monovalent group derived from an unsubstituted or substituted aromatic ring. When the aromatic ring is substituted by a substituent, examples of the substituent include a halogen atom, an alkyl group, an alkoxy group, a hydroxy group and a cyano group, and the aromatic ring may form a condensed ring. When the aromatic ring forms a condensed ring, the condensed ring may be, for example, a condensed aromatic ring having 8 or more carbon atoms, an aromatic ring having a heterocycle condensed therein, or two or more aromatic rings linked to each other.

The "condensed aromatic ring having 8 or more carbon atoms" may be an aromatic ring having two or more benzene rings condensed therein or an aromatic ring having 8 or more carbon atoms composed of at least one aromatic ring and a ring formed by an alicyclic hydrocarbon condensed with the aromatic ring. Specific examples include naphthalene, anthracene, fluorene, phenanthrene, and acenaphthene.
The "aromatic ring having a heterocycle condensed therein" is a compound consisting of a heteroatom-free aromatic compound (preferably a benzene ring) condensed with a heteroatom-containing cyclic compound. The heteroatom-containing cyclic compound is preferably a five- or six-membered ring. The heteroatom is preferably a nitrogen atom, an oxygen atom or a sulfur atom. The heteroatom-containing cyclic compound may have a plurality of heteroatoms. In this case, the heteroatoms may be the same as or different from each other. Specific examples of the aromatic ring having a heterocycle condensed therein include phthalimide, acridone, carbazole, benzoxazole, and benzothiazole.

The aromatic ring which derives a monovalent group represented by Ar¹ is linked via an ester group and an ethylene oxide chain to the main chain of the water-insoluble resin, and the aromatic ring is not directly linked to the main chain, and thus a suitable distance is maintained between the hydrophobic aromatic ring and the hydrophilic structural unit, so that the water-insoluble resin interacts readily with, and is adsorbed firmly onto, a pigment to improve dispersibility.
In particular, the aromatic ring which derives a monovalent group represented by Ar¹ is preferably an unsubstituted benzene ring or an unsubstituted naphthalene ring, and particularly preferably an unsubstituted benzene ring.

n is an average repeating number of the ethyleneoxy units in the water-insoluble resin used for the resin-coated pigment contained in the aqueous ink composition. n is in the range of 1 to 6, and preferably 1 to 2.

Specific examples of monomers that forms the repeating unit represented by Formula (I) include phenoxyethyl (meth)acrylates and the like, and the following monomers.

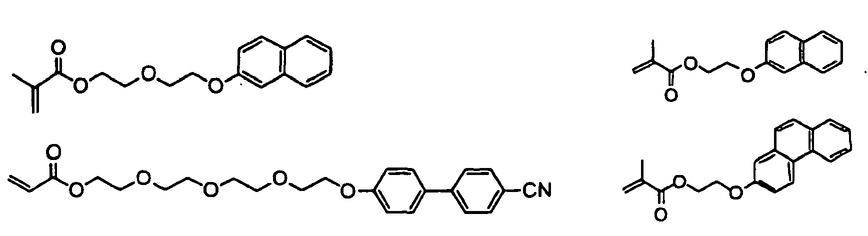

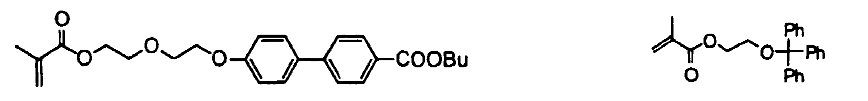

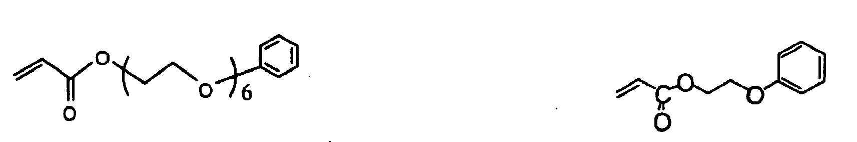

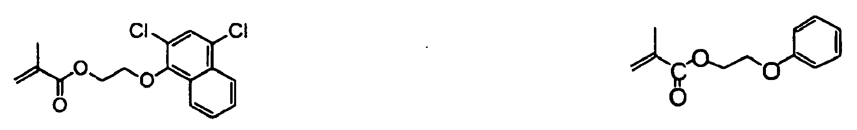

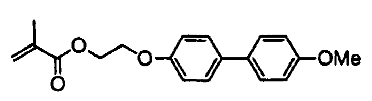

From the viewpoint of dispersion stability, it is particularly preferable that in the repeating unit represented by Formula (I), R¹ is a methyl group, Ar is an unsubstituted benzene ring, and n is 1 to 2.

The content of the repeating unit of Formula (I) in the water-insoluble resin is preferably in the range of 30% by mass to 70% by mass, and more preferably in the range of 40% by mass to 50% by mass, based on the total mass of the water-insoluble resin. When the content is 30% by mass or more, dispersibility is good, and when the content is 70% by mass or less, the adhesion and deposition of the aggregate may be prevented, the removability of adhered aggregate (maintenance properties) is good, and generation of imaging defects such as white spots may be prevented.

The water-insoluble resin in the invention is preferably a resin including a hydrophilic structural unit (A) and a hydrophobic structural unit (B), from the viewpoint of allowing the water-insoluble resin to be stably present in an aqueous ink, to reduce adhesion or deposition of the aggregate, and to facilitate removal of the adhered aggregate. Herein, the hydrophobic structural unit (B) preferably includes the repeating unit represented by Formula (I) above.

The water-insoluble resin of the present invention may further have an additional hydrophobic structural unit (B') other than the repeating unit represented by Formula (1) and the repeating unit represented by Formula (I). Examples of the hydrophobic structural unit (B') may include a structural units derived from vinyl monomers such as (meth)acrylates, (meth)acrylamides, styrenes or vinylesters which do not belong to the hydrophilic structural unit (A) (for example, those having no hydrophilic functional group), a hydrophobic structural unit having an aromatic ring that is linked to an atom of the main chain thereof through a linking group, and the like. These structural units may be used one kind alone or two or more kinds in combination.

Examples of the (meth)acrylates include methyl (meth)acrylate, ethyl (meth)acrylate, butyl (meth)acrylate, isobutyl (meth)acrylate, and hexyl (meth)acrylate. Among them, methyl (meth)acrylate, ethyl (meth)acrylate, and butyl (meth)acrylate are preferable, and methyl (meth)acrylate and ethyl (meth)acrylate are particularly preferable.
Examples of the (meth)acrylamides include N-cyclohexyl (meth)acrylamide, N-(2-methoxyethyl) (meth)acrylamide, N,N-diallyl (meth)acrylamide, and N-allyl (meth)acrylamide.
Examples of the styrenes include styrene, methylstyrene, dimethylstyrene, trimethylstyrene, ethylstyrene, isopropylstyrene, n-butylstyrene, tert-butylstyrene, methoxystyrene, butoxystyrene, acetoxystyrene, chlorostyrene, dichlorostyrene, bromostyrene, chloromethylstyrene, hydroxystyrene protected by a group removable with an acidic substance (for example, t-Boc), methyl vinyl benzoate, α-methylstyrene, and vinylnaphthalene. Among them, styrene and α-methylstyrene are preferable.
Examples of the vinyl esters include vinyl acetate, vinyl chloroacetate, vinyl propionate, vinyl butyrate, vinyl methoxyacetate, and vinyl benzoate. Among them, vinyl acetate is preferable.

The above-described "hydrophobic structural unit containing an aromatic ring that is linked to an atom in the main chain via a linking group" is preferably a structural unit wherein the proportion of the aromatic ring linked to an atom in the main chain of the copolymer via a linking group is from 15% by mass to 27% by mass, more preferably from 15% by mass to 25% by mass, and even more preferably from 15% by mass to 20% by mass with respect to the copolymer.
The aromatic ring is linked to the atom in the main chain of the copolymer not directly but via a linking group. Therefore, an adequate distance is kept between the hydrophobic aromatic ring and the hydrophilic structural unit, so that the copolymer readily interacts with the pigment and is firmly adsorbed thereon, thus improving the dispersibility of the pigment.

The "hydrophobic structural unit containing an aromatic ring that is linked to an atom in the main chain via a linking group" is preferably a structural unit represented by the following Formula (2) (excluding the repeating unit represented by Formula (1)).

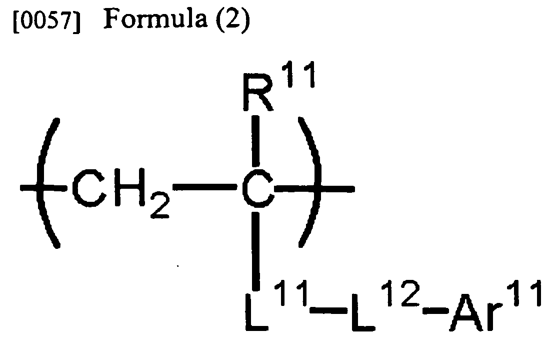

In Formula (2), R¹¹ represents a hydrogen atom, a methyl group, or a halogen atom. L¹¹ represents *-COO-, *-OCO-, *-CONR¹²-,or *-O-, and R¹² represents a hydrogen atom or an alkyl group having 1 to 10 carbon atoms. In the group represented by L¹¹, an asterisk (*) denotes a bond connected to the main chain.

L¹² represents a single bond or a divalent linking group having 1 to 30 carbon atoms. When L¹² is a divalent linking group, it is preferably a linking group having 1 to 25 carbon atoms, more preferably a linking group having 1 to 20 carbon atoms, and even more preferably a linking group having 1 to 15 carbon atoms.
Among them, particularly preferable examples include an alkyleneoxy group having 1 to 25 (more preferably 1 to 10 carbon atoms) carbon atoms, an imino group (-NH-), a sulfamoyl group, and divalent linking groups containing an alkylene group, such as an alkylene group having 1 to 20 carbon atoms (more preferably 1 to 15 carbon atoms) or an ethylene oxide group [-(CH₂CH₂O)ₙ-, n = 1 to 6], and combinations of two or more of these groups.

In Formula (2), Ar¹¹ represents a monovalent group derived from an aromatic ring.
The aromatic ring group which derives the monovalent group represented by Ar¹¹ is not particularly limited, and examples of the aromatic ring include a benzene ring, a condensed aromatic ring having eight or more carbon atoms, an aromatic ring condensed with a heterocycle, and two or more benzene rings linked to each other. The details about the condensed aromatic ring having eight or more carbon atoms and the aromatic ring condensed with a heterocycle have been described above.

Specific examples of the other monomer capable of forming the other hydrophobic structural unit (B') are shown below. However, the invention is not limited to the following specific examples.

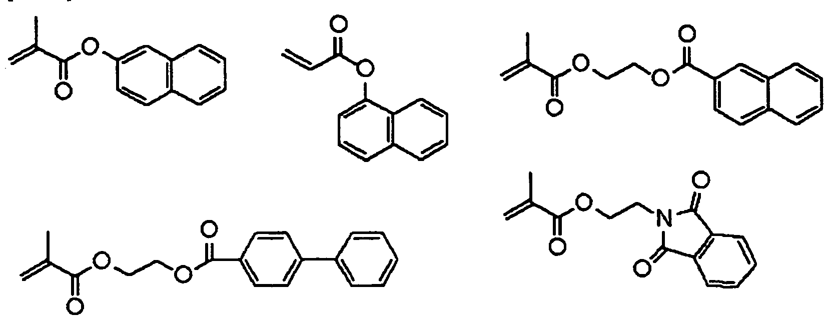

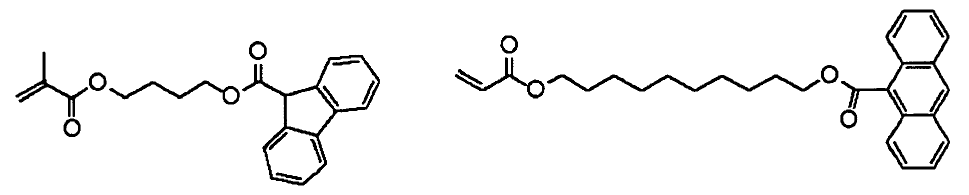

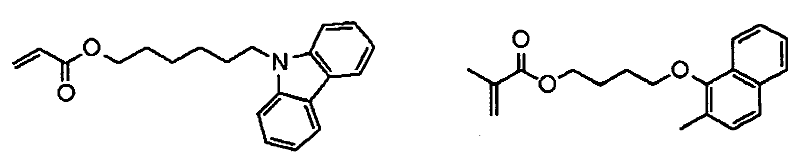

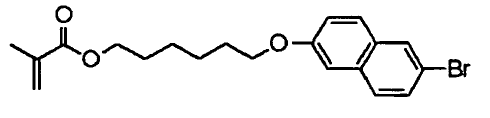

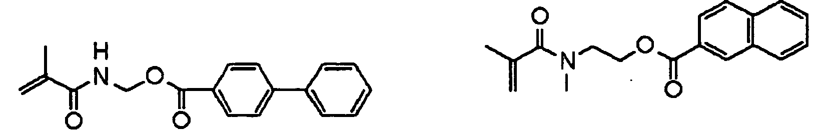

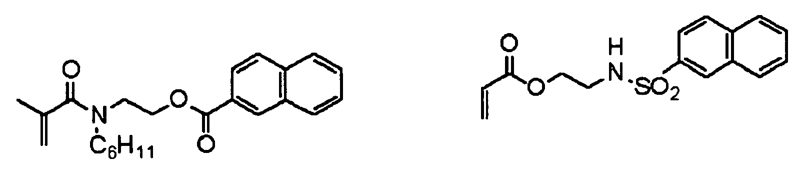

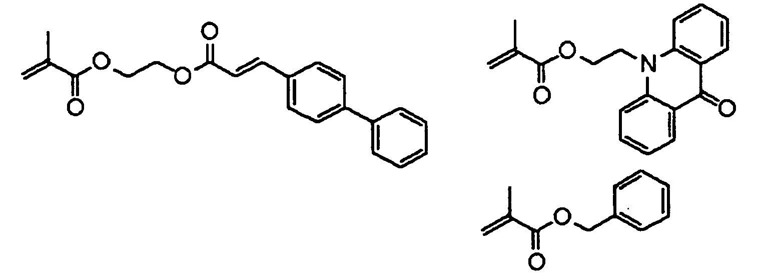

The water-insoluble resin of the present invention is, among the above, preferably **characterized in that** the hydrophilic structural unit (A) is (meth)acrylic acid and the hydrophobic structural unit (B) is at least one kind selected from (i) a repeating unit represented by Formula (1) (preferably a structural unit derived from the foregoing M-25/M-27 or M-28/M-29), (ii) a repeating unit represented by Formula (I) (preferably a repeating unit derived from phenoxyethyl (meth)acrylate), and (iii) a hydrophobic structural unit (B') other than the foregoing structural units (preferably a structural unit derived from methyl (meth)acrylate, ethyl (meth)acrylate, or benzyl methacrylate).
Furthermore, the water-insoluble resin of the present invention is preferably **characterized in that** the hydrophilic structural unit (A) is (meth)acrylic acid and the hydrophobic structural unit (B) contains at least one kind of the above (i) and (ii).
Particularly, the water-insoluble resin of the present invention is preferably **characterized in that** the hydrophilic structural unit (A) is (meth)acrylic acid and the hydrophobic structural unit (B) contains at least one kind of the above (i) and (ii) and further contains (iii).

In the water-insoluble resin in the invention, although the ratio of the hydrophilic structural unit (A) to the hydrophobic structural unit (B) (including the repeating unit represented by Formula (I), the repeating unit represented by Formula (1) and the other hydrophobic structural units (B') depends on the degrees of the hydrophilicity and hydrophobicity of these components, the content of the hydrophilic structural units (A) in the water-insoluble resin is preferably 15% by mass or less. The content of the hydrophobic structural units (B) is preferably more than 80% by mass, and more preferably 85% by mass or more with respect to the total mass of the water-insoluble resin.
When the content of the hydrophilic structural unit (A) is 15% by mass or less, the amount of the component that dissolves alone in the aqueous medium is decreased, which results in the improvement of pigment properties such as dispersibility, whereby good ink ejection properties are achieved during inkjet recording.

The content ratio of the hydrophilic structural unit (A) is preferably more than 0% by mass but 15% by mass or less, more preferably from 2% by mass to 15% by mass, even more preferably from 5% by mass to 15% by mass, and particularly preferably from 8% by mass to 12% by mass with respect to the total mass of the water-insoluble resin.

In the invention, the acid value of the water-insoluble resin is preferably from 30 mgKOH/g to 100 mgKOH/g , more preferably from 30 mgKOH/g to 85 mgKOH/g, and particularly preferably from 50 mgKOH/g to 85 mgKOH/g from the viewpoints of pigment dispersibility and storage stability.
The acid value is defined as the mass (mg) of KOH necessary for completely neutralizing 1 g of the water-insoluble resin, and measured by the method described in Japanese Industrial Standard (JIS K0070, 1992), the disclosure of which is incorporated by reference herein.

The weight average molecular weight (Mw) of the water-insoluble resin in the invention is preferably 30,000 or more, more preferably from 30,000 to 150,000, even more preferably from 30,000 to 100,000, and particularly preferably from 30,000 to 80,000. If the molecular weight is 30000 or more, the water-insoluble resin may provide a good steric repulsion effect as a dispersant, and is readily adsorbed on the pigment owing to the steric effect.
The number average molecular weight (Mn) of the water-insoluble resin is preferably about 1,000 to about 100,000, and particularly preferably about 3,000 to about 50,000. When the number average molecular weight is within the above-described range, the water-insoluble resin may serve as a coating on the pigment or a coating of the ink composition. The water-insoluble resin in the invention is preferably used in the form of an alkali metal salt or an organic amine salt.

The molecular weight distribution of the water-insoluble resin in the invention (weight average molecular weight/number average molecular weight) is preferably from 1 to 6, and more preferably from 1 to 4. When the molecular weight distribution is within the above-described range, the resulting ink has improved dispersion stability and ejection stability.

The number average molecular weight and the weight average molecular weight are measured by the differential refractometer detection with THF as a solvent in a GPC analyzer using columns TSKgel GMHxL, TSKgel G4000 HxL and TSKgel G2000 HxL (trade name; all manufactured by Tosoh Corporation), and is obtained in terms of polystyrene used as a reference material.

The water-insoluble resin in the invention may be synthesized by any polymerization method, for example, solution polymerization, precipitation polymerization, suspension polymerization, bulk polymerization, or emulsion polymerization. The polymerization reaction may be carried out under a known system, such as a batch, semi-continuous, or continuous system. Initiation of the polymerization may be carried out with a radical initiator, or photoirradiation or radiation-irradiation. These methods of polymerization and initiation of polymerization are described in, for example, "Kobunshi Gosei Hoho" by Teiji Tsuruta, Revised Edition (published by Nikkan Kogyo Shimbun, Ltd., 1971) and "Kobunshi Gosei no Jikkenho" by Takayuki Ohtu and Masaetu Kinoshita (published by Kagaku-Dojin Publishing Company Inc., 1972) pages 124 to 154.
Among these polymerization methods, a solution polymerization method using a radical initiator is preferable. Examples of the solvent used in the solution polymerization method include various organic solvents such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methanol, ethanol, 1-propanol, 2-propanol, and 1-butanol. These solvents may be used alone or in a combination of two or more of them, or may be mixed with water as a mixed solution. The polymerization temperature should be chosen in consideration of the molecular weight of the intended polymer and the type of the initiator, and is usually from 0°C to 100°C, and is preferably from 50°C to 100°C. The reaction pressure may be appropriately selected, and is usually from 1 kg/cm² to 100 kg/cm², and particularly preferably from about 1 kg/cm² to about 30 kg/cm². The reaction period may be about 5 hours to about 30 hours. The resulting resin may be subjected to purification treatment such as reprecipitation.

Specific examples of preferable water-insoluble resins of the invention are shown below. The invention is not limited to these examples. In the following Formula, a, b and c each independently represent the content of the correspondent repeating unit % by mass in the polymer.

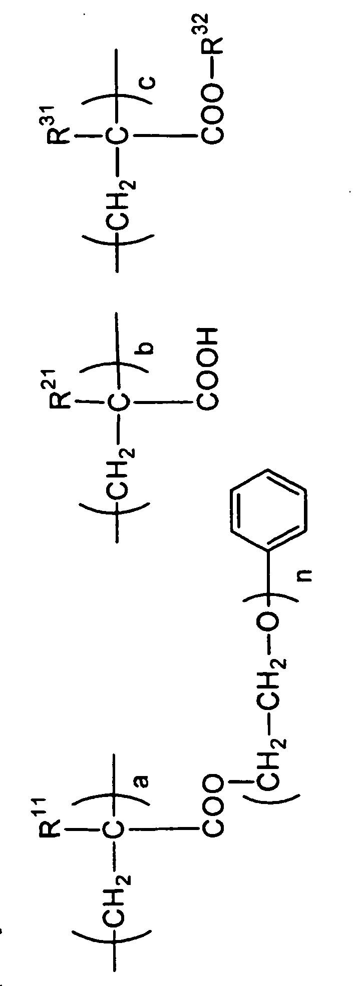

| | R¹¹ | n | R²¹ | R³¹ | R³² | a | b | c | Mw |
|---|---|---|---|---|---|---|---|---|---|
| B-1 | CH₃ | | CH₃ | CH₃ | -CH₃ | 60 | 9 | 31 | 35500 |
| B-2 | H | 1 | H | H | -CH₂CH₃ | 69 | 10 | 21 | 41200 |
| B-3 | CH₃ | 2 | CH₃ | CH₃ | -CH₃ | 70 | 11 | 19 | 68000 |
| B-4 | CH₃ | 4 | CH₃ | CH₃ | -CH₂(CH₂)CH₃ | 70 | 7 | 23 | 72000 |
| B-5 | H | 5 | H | H | -CH₃ | 70 | 10 | 20 | 86000 |
| B-6 | H | 5 | H | H | -CH₂CH(CH₃)CH₃ | 70 | 2 | 28 | 42000 |
| B-7 | CH₃ | 1 | CH₃ | CH₃ | -CH₂CH₃ | 50 | 11 | 39 | 44500 |
| B-8 | CH₃ | 1 | CH₃ | CH₃ | -CH₂CH₃ | 50 | 10 | 40 | 51200 |
| B-9 | H | 1 | H | H | -CH₂CH₃ | 45 | 11 | 44 | 48900 |
| B-10 | H | 1 | CH₃ | CH₃ | -CH₂CH₃ | 45 | 12 | 43 | 43600 |

| | | | | | | | | | Mw |
|---|---|---|---|---|---|---|---|---|---|
| B-11 | 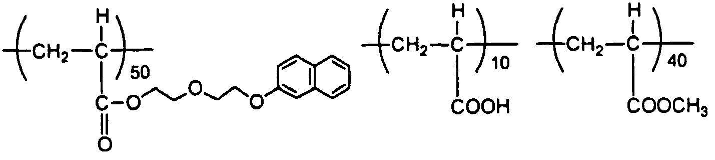 | | | | | | | | 72400 |
| B-12 | 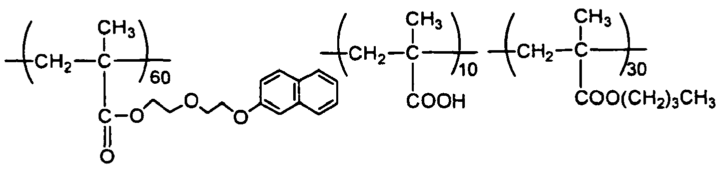 | | | | | | | | 33800 |
| B-13 | 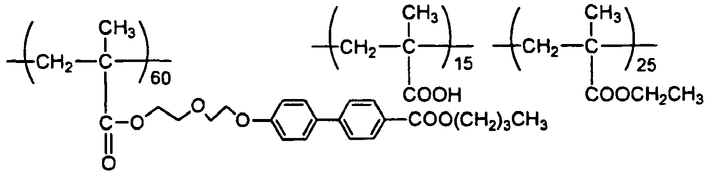 | | | | | | | | 39200 |

### <Pigment>

The pigment used in the exemplary embodiment of the invention is not particularly limited, and may be appropriately selected according to the intended use. The pigment includes an organic pigment and an inorganic pigment.

Examples of the organic pigment include azo pigments, polycyclic pigments, dye chelates, nitro pigments, nitroso pigments, and aniline black. Among them, azo pigments and polycyclic pigments are more preferable.
Examples of the azo pigments include azo lakes, insoluble azo pigments, condensed azo pigments, and chelate azo pigments.
Examples of the polycyclic pigment include phthalocyanine pigments, perylene pigments, perinone pigments, anthraquinone pigments, quinacridone pigments, dioxazine pigments, indigo pigments, thioindigo pigments, isoindolinone pigments, and quinophthalone pigments.
Examples of the dye chelates include basic dye chelates and acidic dye chelates.

Examples of the inorganic pigments include titanium oxide, iron oxide, calcium carbonate, barium sulfate, aluminium hydroxide, barium yellow, cadmium red, chrome yellow, and carbon black. Among them, carbon black is particularly preferable. Carbon black may be produced by a known method such as a contact method, a furnace method, or a thermal method.

These pigments may be used alone or in a combination of two or more of them selected from one or more groups above.

The weight ratio (p:r) between the pigment (p) and the water-insoluble resin (r) in the invention is preferably from 100:25 to 100:140, and more preferably from 100:25 to 100:50. When the proportion of the water-insoluble resin is 25 or more, dispersion stability and rub resistance tend to improve, and when 140 or less, dispersion stability tends to improve.

The resin-coated pigment (capsulated pigment) in the invention may be produced using a water-insoluble resin and a pigment by a known physical or chemical method such as that described in JP-A Nos. 9-151342, 10-140065, 11-209672, 11-172180, 10-25440, and 11-43636. Specific examples of the method include the phase inversion method and acid precipitation method described in JP-A Nos. 9-151342 and 10-140065. Of these methods, the phase inversion method is preferable from the viewpoint of dispersion stability.

Basically, the phase inversion method is a self dispersion (phase inversion emulsification) method comprising dispersing in water a mixed melt of a pigment and a resin having self dispersibility or solubility. The mixed melt may contain a curing agent or a polymer compound. The mixed melt refers to a state where undissolved components are mixed and/or a state where dissolved components are mixed. Details about the "phase inversion method" are described in JP-A No. 10-140065.

In the aqueous ink composition in the invention, the resin-coated pigment in the invention may be prepared using the water-insoluble resin through a preparation method of preparing a dispersion of the resin-coated pigment including, for example, the following steps (1) and (2). The aqueous ink composition of the invention may be prepared by preparing a dispersion of the resin-coated pigment in accordance with the above-described preparation method, followed by preparing an aqueous ink from the obtained dispersion of the resin-coated pigment, water, and an organic solvent.
Step (1): a mixture containing a water-insoluble resin including the repeating unit represented by the formula (I), an organic solvent, a neutralizing agent, a pigment, and water is dispersed with a stirrer or the like to obtain a dispersion.
Step (2): the organic solvent is removed from the dispersion.

The stirring method is not particularly limited, and may use a common mixing stirrer or, if necessary, a disperser such as an ultrasonic disperser, a high-pressure homogenizer, or a bead mill.

Examples of the organic solvent preferable herein include alcohol solvents, ketone solvents, and ether solvents. Examples of the alcohol solvents include isopropyl alcohol, n-butanol, t-butanol, and ethanol. Examples of the ketone solvents include acetone, methyl ethyl ketone, diethyl ketone, and methyl isobutyl ketone. Examples of the ether solvents include dibutyl ether and dioxane. Among these solvents, ketone solvents such as methyl ethyl ketone and alcohol solvents such as isopropyl alcohol are preferable, and methyl ethyl ketone is more preferable.

The neutralizing agent is preferably used in the step (1) and is used for forming an emulsion or dispersion wherein a part or all of the acid groups of the water-insoluble resin is neutralized, and the water-insoluble resin is stable in a state of an emulsion or a dispersion in water. The details about the neutralizing agent will be described later.

In the step (2), the organic solvent is evaporated from the dispersion prepared in the step (1) by a common procedure such as vacuum distillation to convert the phase into a water system, thereby obtaining a dispersion of resin-coated pigment particles, the particle surface of the pigment being coated with the water-insoluble resin. The obtained dispersion is substantially free of the organic solvent. The amount of the organic solvent is preferably 0.2% by mass or less, and more preferably 0.1 % by mass or less.

More specifically, for example, the above-described method includes steps of: (1) mixing an acid group-containing water-insoluble resin or its solution in an organic solvent with a basic compound (neutralizing agent), thereby carrying out neutralization; (2) mixing the obtained mixed solution with a pigment to make a suspension, and then dispersing the pigment using a disperser or the like to obtain a pigment dispersion; and (3) removing the organic solvent by, for example, distillation, thereby coating the pigment with the acid group-containing specific water-insoluble resin, and dispersing the coated pigment particles in an aqueous medium to make an aqueous dispersion.
The method is further detailed in JP-A Nos. 11-209672 and 11-172180.

In the invention, the dispersion treatment may be carried out using, for example, a ball mill, a roll mill, a bead mill, a high-pressure homogenizer, a high-speed stirring disperser, or an ultrasonic homogenizer.

The content of the pigment coated with water-insoluble resin in the invention is preferably from 1% by mass to 10% by mass, more preferably from 2% by mass to 8% by mass, and particularly preferably from 2% by mass to 6% by mass from the viewpoints of the dispersion stability and concentration of the aqueous ink composition.

### -Organic solvent-

The aqueous ink composition in the invention contains at least one organic solvent. The organic solvent is used as an anti-drying agent, a humectant, or a penetration enhancing agent. The anti-drying agent is used for preventing clogging of inkjet nozzles caused by adhesion, drying, and aggregation of ink at the ink ejection ports. The anti-drying agent or humectant is preferably a water-soluble organic solvent having a lower vapor pressure than that of water. The penetration enhancing agent is used to improve ink permeability through paper.

The organic solvent contained in the aqueous ink composition in the invention may be appropriately selected from known organic solvents which serve as an anti-drying agent, a humectant, or a penetration enhancing agent. From the viewpoint of compatibility with water, the organic solvent is preferably water-soluble.
Examples of water-soluble organic solvents include alkanediols (polyhydric alcohols) such as glycerin, 1,2,6-hexanetriol, trimethylolpropane, ethylene glycol, propylene glycol, diethylene glycol, triethylene glycol, tetraethylene glycol, pentaethylene glycol, dipropylene glycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; alkyl alcohols having 1 to 4 carbon atoms, such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxy butanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, and dipropylene glycol mono-iso-propyl ether; 2-pyrrolidone, N-methyl-2-pyrrolidone, 1,3-dimethyl-2-imidazolidinone, formamide, acetamido, dimethyl sulfoxide, sorbit, sorbitan, acetin, diacetin, triacetin, and sulfolane. These organic solvents may be used alone or in a combination of two or more of them.
It is also preferable to use solid humectants, for example, saccharides such as glucose, mannose, fructose, ribose, xylose, arabinose, galactose, aldonic acid, glucitol, maltose, cellobiose, lactose, sucrose, trehalose, and maltotriose; glycitols; hyaluronic acids; or ureas in combination.

As an anti-drying agent or a humectant, polyhydric alcohols are useful. Examples of the polyhydric alcohols include glycerin, ethylene glycol, diethylene glycol, triethylene glycol, propylene glycol, dipropylene glycol, tripropylene glycol, 1,3-butanediol, 2,3-butanediol, 1,4-butanediol, 3-methyl-1,3-butanediol, 1,5-pentanediol, tetraethylene glycol, 1,6-hexanediol, 2-methyl-2,4-pentanediol, polyethylene glycol, 1,2,4-butanetriol, and 1,2,6-hexanetriol. These polyhydric alcohols may be used alone or in a combination of two or more of them.

As a penetration enhancing agent, polyol compounds are preferable. Examples of aliphatic diols include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, and 2-ethyl-1,3-hexanediol. Among them, 2-ethyl-1,3-hexanediol and 2,2,4-trimethyl-1,3-pentanediol are preferable.

The above-described organic solvents may be used alone or in a combination of two or more of them.
The content of the organic solvent in the aqueous ink composition is preferably from 1% by mass to 60% by mass, more preferably from 5% by mass to 40% by mass and particularly preferably from 10% by mass to 30% by mass, from the viewpoints of stability and keeping reliability of ink ejection.

### -Water-

The aqueous ink composition in the invention contains water. The content of water is not particularly limited, and is preferably from 10% by mass to 99% by mass, more preferably from 30% by mass to 80% by mass, and even more preferably from 50% by mass to 70% by mass.

### -Neutralizing agent-

The aqueous ink composition in the invention preferably contains at least one neutral izing agent. The neutralizing agent is used for neutralizing acid groups contained in the wate r-insoluble resin during preparation of pigment particles coated with the water-insoluble resin. The amount of the neutralizing agent is preferably from 0.5 equivalents to 1.5 equivalents, a nd more preferably from 1 equivalent to 1.5 equivalents with respect to the acid value of the water-insoluble resin.

Examples of the neutralizing agent include alcohol amines (for example, diethanolam ine, triethanolamine, and 2-amino-2-ethyl-1,3-propanediol), alkali metal hydroxides (for exam ple, lithium hydroxide, sodium hydroxide, and potassium hydroxide), ammonium hydroxide ( for example, ammonium hydroxide, and quaternary ammonium hydroxide), phosphonium hyd roxides, and alkali metal carbonates. Among them, sodium hydroxide and potassium hydroxi de are preferably used.

### -Resin particles-

The aqueous ink composition according to the invention preferably contains at least o ne species of resin particles, from the viewpoints of fixing property, rub resistance, and applic ation of aggregation property to avoid ink deposition interference.
The resin particles have a function of immobilizing aqueous ink, i.e. images, by thickening the ink through aggregation or making a dispersion thereof unstable, when the resin particles are brought into contact with the aqueous liquid composition or a paper region on which the aqueous liquid composition has been applied and dried. Such resin particles are preferably dispersed in water or in an organic solvent.

Examples of the resin particles include particles of acrylic resins, vinyl acetate resins, styrene-butadiene resins, vinyl chloride resins, acryl-styrene resins, butadiene resins, styrenic resins, crosslinked acrylic resins, crosslinked styrenic resins, benzoguanamine resins, phenolic resins, silicone resins, epoxy resins, urethane resins, paraffin resins, or fluorocarbon resins.
Among the above resins, acrylic resins, acryl-styrene resins, styrenic resins, crosslinked acrylic resins, and crosslinked styrenic resins are preferable, and acrylic resins are particularly preferable.

The acrylic resin is obtained, for example, by polymerizing in a solvent an acryl monomer having an anionic group (an anionic group containing acryl monomer) and, if necessary the other monomer copolymerizable with the anionic group containing acryl monomer. As the anionic group containing acryl monomer, there may be mentioned, for example, an acryl monomer having at least one selected from the group consisting of a carboxy group, a sulfonic group, and a phosphonic group. Among these, an acryl monomer having a carboxy group (for example, acrylic acid, methacrylic acid, crotonic acid, ethacrylic acid, propylacrylic acid, isopropylacrylic acid, itaconic acid, fumaric acid, or the like) is preferable, and particularly acrylic acid or methacrylic acid is preferable.

As the resin particles, specifically, latex is suitably used. For example, various kinds of latex including acryl latex, vinyl acetate latex, styrene latex, and polyester latex are suitably used. Particularly, acryl latex is preferable.

The resin particles of the present invention are preferably self-dispersing polymer particles and more preferably self-dispersing polymer particles having a carboxy group, from the viewpoint of ejection stability and liquid stability (particularly, dispersion stability) when a coloring material (particularly, pigment) is used. The self-dispersing polymer particles are a water-insoluble polymer that provides a dispersion state in an aqueous medium, in the absence of a surfactant, by an action of a functional group (particularly an acid group or its salt) that the polymer itself possesses, and denote water-insoluble polymer particles that contain no free emulsifier.

The dispersion state used herein includes both an emulsifying state (emulsion) in which a water-insoluble polymer is dispersed in a liquid state in an aqueous medium and a dispersion state (suspension) in which a water-insoluble polymer is dispersed in a solid state in an aqueous medium.
The water-insoluble polymer of the present invention is preferably a water-insoluble polymer that is capable of providing a dispersion state in which the water-insoluble polymer is dispersed in a solid state, from the viewpoints of aggregation speed and fixing property when incorporated in a liquid composition.

The dispersion state of the self-dispersing polymer particles denotes a state that is recognizable by visual observation and remains stably for at least one week at 25°C even after a solution obtained by dissolving 30 g of the water-insoluble polymer in 70 g of an organic solvent (for example, methyl ethyl ketone), a neutralizer capable of neutralizing 100% of the salt forming group of the water-insoluble polymer (sodium hydroxide when the salt forming group is anionic, or acetic acid when the salt forming group is cationic), and 200 g of water are mixed and agitated (apparatus: an agitator with agitation propellers, at a revolution of 200 rpm for 30 minutes at 25°C) and then the organic solvent is removed from the resulting mixed liquid.

The water-insoluble polymer is a polymer **characterized in that** the dissolution amount of the polymer is 10 g or less when the polymer is dried at 105°C for 2 hours and dissolved in 100 g of water at 25°C. The dissolution amount is preferably 5 g or less, and more preferably 1 g or less. The dissolution amount is the one obtained when 100% of the salt forming group of the water-insoluble polymer are neutralized with sodium hydroxide or acetic acid depending on the kind of the salt forming group of the water-insoluble polymer.

The aqueous medium contains water and may also contain a hydrophilic organic solvent, if necessary. In the present invention, the aqueous medium is preferably composed of water and a hydrophilic organic solvent in an amount of 0.2% by mass or less with respect to water, and more preferably composed of water.

The main-chain skeleton of the water-insoluble polymer is not particularly limited, and, for example, vinyl polymers or condensed polymers (epoxy resin, polyester, polyurethane, polyamide, cellulose, polyether, polyurea, polyimide, polycarbonate, or the like) are usable. Among these, particularly, vinyl polymers are preferable.

Preferable examples of the vinyl polymers and monomers that compose the vinyl polymers may include the ones that are described in JP-A Nos. 2001-181549 and 2002-88294. In addition, vinyl polymers, in which a dissociative group is introduced into the terminal of the polymer chain thereof by radical polymerization using a chain transfer agent or polymerization initiator that has a dissociative group (or a substituent from which the dissociative group is allowed to be derived) or an iniferter or by ion polymerization using as either of an initiator or a terminator, a compound having a dissociative group (or a substituent from which the dissociative group is allowed to be derived), are also usable.
In addition, preferable examples of the condensed polymers and the monomers that compose the condensed polymers may include the ones that are described in JP-A No. 2001-247787.

The self-dispersing polymer particles preferably contain a water-insoluble polymer that has a hydrophilic structural unit and a structural unit derived from an aromatic group containing monomer, from the viewpoint of self-dispersibility.

The hydrophilic structural unit is not particularly limited as long as it is derived from a hydrophilic group containing monomer, and may be derived from one kind of hydrophilic group containing monomer or two or more kinds of hydrophilic group containing monomers. The hydrophilic group is not particularly limited and may be a dissociative group or a nonionic hydrophilic group.
In the present invention, the hydrophilic group is preferably a dissociative group and more preferably an anionic dissociative group, from the viewpoints of promoting self-dispersibility and stability of a resulting emulsion state or dispersion state. The dissociative group may include a carboxy group, a phosphoric acid group, and a sulfonic acid group, and among these, from the viewpoint of fixing property of a resulting ink composition, a carboxy group is preferable.

The hydrophilic group containing monomer of the present invention is preferably a dissociative group containing monomer and more preferably a dissociative group containing monomer having a dissociative group and an ethylenically unsaturated bond, from the viewpoints of self-dispersibility and aggregation property.
Examples of the dissociative group containing monomer may include an unsaturated carboxylic acid monomer, an unsaturated sulfonic acid monomer, and an unsaturated phosphoric acid monomer.

Specific examples of the unsaturated carboxylic acid monomer may include: acrylic acid, methacrylic acid, crotonic acid, itaconic acid, maleic acid, fumaric acid, citraconic acid, and 2-methacryloyloxymethyl succinic acid. Specific examples of the unsaturated sulfonic acid monomer may include: styrenesulfonic acid, 2-acrylamido-2-methylpropanesulfonic acid, 3-sulfopropyl (meth)acrylate, and bis(3-sulfopropyl) itaconate. Specific examples of the unsaturated phosphoric acid monomer may include: vinylphosphonic acid, vinyl phosphate, vis(methacryloxyethyl) phosphate, diphenyl-2-acryloyloxyethyl phosphate, diphenyl-2-methacryloyloxyethyl phosphate, and dibutyl-2-acryloyloxyethyl phosphate.
Among the above dissociative group containing monomers, from the viewpoint of dispersion stability and ejection stability, the unsaturated carboxylic acid monomer is preferable, and acrylic acid and methacrylic acid are more preferable.

The self-dispersing polymer particles of the present invention contain preferably a polymer having a carboxy group, from the viewpoint of aggregation speed at the time when the self-dispersing polymer particles come in contact with the aqueous liquid composition, and more preferably a polymer that has a carboxy group and an acid value (mgKOH/g) of from 25 to 100. Furthermore, the acid value is more preferably from 25 to 80 and particularly preferably from 30 to 65, from the viewpoint of aggregation speed at the time when the self-dispersing polymer particles come in contact with the aqueous liquid composition.
Particularly, when the acid value is 25 or more, self-dispersing stability becomes adequate, and when 100 or less, aggregation property is improved.

The aromatic group containing monomer is not particularly limited as long as it is a compound having an aromatic group and a polymerizable group. The aromatic group may be a group derived from an aromatic hydrocarbon or an aromatic heterocycle. In the present invention, from the viewpoint of particle shape stability in an aqueous medium, an aromatic group derived from an aromatic hydrocarbon is preferable.
The polymerizable group may be a condensation polymerizable group or an addition polymerizable group. In the present invention, from the viewpoint of particle shape stability in an aqueous medium, an addition polymerizable group is preferable, and a group containing an ethylenically unsaturated bond is more preferable.

The aromatic group containing monomer of the present invention is preferably a monomer having an aromatic group derived from an aromatic hydrocarbon and an ethylenically unsaturated bond. The aromatic group containing monomer may be used one kind alone or two or more kinds in combination.

Examples of the aromatic group containing monomer may include: phenoxyethyl (meth)acrylate, benzyl (meth)acrylate, phenyl (meth)acrylate, and a styrenic monomer. Among these, from the viewpoints of balancing hydrophilicity and hydrophobicity of the polymer chain and fixing property of an ink, an aromatic group containing (meth)acrylate monomer is preferable. At least one kind selected from phenoxyethyl (meth)acrylate, benzyl (meth)acrylate, and phenyl (meth)acrylate is more preferable. Phenoxyethyl (meth)acrylate and benzyl (meth)acrylate are still more preferable.
Note that, "(meth)acrylate" denotes acrylate or methacrylate.

The self-dispersing polymer particles of the present invention contain a structural unit derived from an aromatic group containing (meth)acrylate monomer, and the content thereof is preferably from 10% by mass to 95% by mass. When the content of the aromatic group containing (meth)acrylate monomer is from 10% by mass to 95% by mass, the stability of self-emulsion state or self-dispersion state is enhanced, and furthermore, an increase in ink viscosity is able to be suppressed.
In the present invention, the content is more preferably from 15% by mass to 90% by mass, still more preferably from 15% by mass to 80% by mass, and particularly preferably from 25% by mass to 70% by mass, from the viewpoint of stabilization of particle shape in an aqueous medium by an hydrophobic interaction between aromatic rings and lowering in the water-soluble component amount through adequate hydrophobization of the particles.

The self-dispersing polymer particles of the present invention may be constituted of, for example, from a structural unit derived from an aromatic group containing monomer and a structural unit derived from a dissociative group containing monomer. In addition, if necessary, other structural units may be incorporated.

The monomers that composes the other structural units are not particularly limited as long as the monomers are copolymerizable with the aromatic group containing monomer and the dissociative group containing monomer. Among these, an alkyl group containing monomer is preferable from the viewpoints of flexibility of polymer skeleton and easiness of controlling glass transition temperature (Tg).
Examples of the alkyl group containing monomer may include: an alkyl (meth)acrylate such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, or ethylhexyl (meth)acrylate; a hydroxy group containing ethylenically unsaturated monomer such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, or hydroxyhexyl (meth)acrylate; dialkylaminoalkyl (meth)acrylate such as dimethylaminoethyl (meth)acrylate; a (meth)acrylamide including N-hydroxyalkyl (meth)acrylamide such as N-hydroxymethyl (meth)acrylamide, N-hydroxyethyl (meth)acrylamide, or N-hydroxybutyl (meth)acrylamide, and N-alkoxyalkyl (meth)acrylamide such as N-methoxymethyl (meth)acrylamide, N-ethoxymethyl (meth)acrylamide, N-(n- or iso)butoxymethyl (meth)acrylamide, N-methoxyethyl (meth)acrylamide, N-ethoxyethyl (meth)acrylamide, or N-(n- or iso)butoxyethyl (meth)acrylamide.

The molecular weight range of the water-insoluble polymer that composes the self-dispersing polymer particles of the present invention is, in terms of weight-average molecular weight, preferably from 3,000 to 200,000, more preferably from 5,000 to 150,000, and even more preferably from 10,000 to 100,000. When the weight-average molecular weight is selected to be 3,000 or more, the amount of a water-insoluble component is allowed to be effectively suppressed. When the weight-average molecular weight is selected to be 200,000 or less, self-dispersion stability is allowed to be enhanced.

The weight-average molecular weight is determined by gel permeation chromatography (GPC). In GPC, three columns of TSKgel SUPER HZM-H, TSKgel SUPER HZ4000 and TSKgel SUPER HZ200 (trade name, all manufactured by Tosoh Corporation, 4.6 mmID × 15 cm) are used in HLC-8020 GPC (trade name, manufactured by Tosoh Corporation) with THF (tetrahydrofuran) as an eluent. The conditions are as follows: the sample concentration, 0.45% by mass; flow rate, 0.35 mL/min; the sample injection volume, 10 µL; the measurement temperature, 40°C; and detection, RI detector. A calibration curve is prepared from 8 samples of "Standard Sample TSK standard, polystyrene" manufactured by Tosoh Corporation: "F-40", "F-20", "F-4", "F-1", "A-5000", "A-2500", "A-1000" (all trade name), and "n-propylbenzene".

The water-insoluble polymer that composes the self-dispersing polymer particles of the present invention preferably contains, from the viewpoint of controlling hydrophilicity and hydrophobicity of the polymer, a structural unit derived from an aromatic group containing (meth)acrylate monomer (preferably, a structural unit derived from phenoxy (meth)acrylate and/or a structural unit derived from benzyl (meth)acrylate) in an amount of from 15% by mass to 80% by mass in terms of copolymerization ratio with respect to the total mass of the self-dispersing polymer particles.
Further, the water-insoluble polymer preferably contains: a structural unit derived from an aromatic group containing (meth)acrylate monomer in a copolymerization ratio of from 15% by mass to 80% by mass; a structural unit derived from a carboxy group containing monomer; and a structural unit derived from an alkyl group containing monomer (preferably, a structural unit derived from a (meth)acrylic acid alkyl ester) from the viewpoint of controlling hydrophilicity and hydrophobicity of the polymer, and more preferably contains: a structural unit derived from phenoxyethyl (meth)acrylate and/or a structural unit derived from benzyl (meth)acrylate in a copolymerization ratio of from 15% to 80% by mass; a structural unit derived from a carboxy group containing monomer; and a structural unit derived from an alkyl group containing monomer (preferably, a structural unit derived from a (meth)acrylic acid alkyl ester in which the alkyl moiety has 1 to 4 carbon atoms). In addition to that, the water-insoluble polymer preferably has an acid value of from 25 to 100 and a weight-average molecular weight of from 3,000 to 200,000, and more preferably an acid value of from 25 to 95 and a weight-average molecular weight of from 5,000 to 150,000.

As specific examples of the water-insoluble polymer that composes the self-dispersing polymer particles, example compounds B-01 to B-19 are described below, but the present invention is in no way limited to these examples. Note that, figures in parentheses denote the mass ratio of the copolymerization components.
B-01: phenoxyethyl acrylate/methyl methacrylate/acrylic acid copolymer (50/45/5),
B-02: phenoxyethyl acrylate/benzyl methacrylate/isobutyl methacrylate/methacrylic acid copolymer (30/35/29/6),
B-03: phenoxyethyl methacrylate/isobutyl methacrylate/methacrylic acid copolymer (50/44/6),
B-04: phenoxyethyl acrylate/methyl methacrylate/ethyl acrylate/acrylic acid copolymer (30/55/10/5),
B-05: benzyl methacrylate/isobutyl methacrylate/methacrylic acid copolymer (35/59/6),
B-06: styrene/phenoxyethyl acrylate/methyl methacrylate/acrylic acid copolymer (10/50/35/5),
B-07: benzyl acrylate/methyl methacrylate/acrylic acid copolymer (55/40/5),
B-08: phenoxyethyl methacrylate/benzyl acrylate/methacrylic acid copolymer (45/47/8),
B-09: styrene/phenoxyethyl acrylate/butyl methacrylate/acrylic acid copolymer (5/48/40/7),
B-10: benzyl methacrylate/isobutyl methacrylate/cyclohexyl methacrylate/methacrylic acid copolymer (35/30/30/5),
B-11: phenoxyethyl acrylate/methyl methacrylate/butyl acrylate/methacrylic acid copolymer (12/50/30/8),
B-12: benzyl acrylate/isobutyl methacrylate/acrylic acid copolymer (93/2/5),
B-13: styrene/phenoxyethyl methacrylate/butyl acrylate/acrylic acid copolymer (50/5/20/25),
B-14: styrene/butyl acrylate/acrylic acid copolymer (62/35/3),
B-15: methyl methacrylate/phenoxyethyl acrylate/acrylic acid copolymer (45/51/4),
B-16: methyl methacrylate/phenoxyethyl acrylate/acrylic acid copolymer (45/49/6),
B-17: methyl methacrylate/phenoxyethyl acrylate/acrylic acid copolymer (45/48/7),
B-18: methyl methacrylate/phenoxyethyl acrylate/acrylic acid copolymer (45/47/8), and
B-19: methyl methacrylate/phenoxyethyl acrylate/acrylic acid copolymer (45/45/10).

The method of producing the water-insoluble polymer that composes the self-dispersing polymer particles of the present invention is not particularly limited, and may be exemplified by a method in which emulsion polymerization is carried out in the present of a polymerizable surfactant, so that the surfactant and a water-insoluble polymer are bonded together covalently, and a method in which a monomer mixture that contains the hydrophilic group containing monomer and the aromatic group containing monomer is copolymerized by a know polymerization method such as solution polymerization or bulk polymerization. Among these polymerization methods, from the viewpoint of aggregation speed and ejection stability of a resulting ink composition, solution polymerization is preferable, and solution polymerization using an organic solvent is more preferable.

The self-dispersing polymer particles of the present invention are, from the viewpoint of aggregation speed, preferably **characterized in that** a polymer that is synthesized in an organic solvent is contained in the particles, the polymer has a carboxy group, (preferably, the acid value is from 25 to 100) part or all of the carboxy group of the polymer is neutralized, and the particles are prepared in the form of a polymer dispersion in which water serves as a continuous phase. Namely, the self-dispersing polymer particles of the present invention are produced preferably through a step of synthesizing a polymer in an organic solvent and a dispersing step of preparing an aqueous dispersion in which the carboxy group of the polymer is at least partially neutralized.

The dispersing step preferably includes the following Step (1) and Step (2).
Step (1): a mixture that contains a polymer (water-insoluble polymer), an organic solvent, a neutralizer, and an aqueous medium is agitated.
Step (2): the organic solvent is removed from the mixture.

Step (1) is preferably a treatment in which a polymer (water-insoluble polymer) is dissolved in an organic solvent at first, then a neutralizer and an aqueous medium are gradually admixed, and the resulting mixture is agitated so as to obtain a dispersion. In this way, a neutralizer and an aqueous medium are added to a solution obtained by dissolving a water-insoluble polymer in an organic solvent, so that self-dispersing polymer particles having a particle size to achieve a high storage stability are obtained without requiring intense shearing force.
The method of agitating the mixture is not particularly limited, and conventional mixing agitators, and if necessary, ultrasonic dispersers or high pressure homogenizers are usable.

Examples of the organic solvent may include preferably an alcohol solvent, a ketone solvent, and an ether solvent.
Examples of the alcohol solvent may include: isopropyl alcohol, n-butanol, t-butanol, and ethanol. Examples of the ketone solvent may include: acetone, methyl ethyl ketone, diethyl ketone, and methyl isobutyl ketone. Examples of the ether solvent may include: dibutyl ether and dioxane. Among these solvents, the ketone solvent such as methyl ethyl ketone and the alcohol solvent such as isopropyl alcohol are preferable. In addition, for the purpose of reducing the opportunity of polarity change from an oil system to an aqueous system upon phase transition, isopropyl alcohol and methyl ethyl ketone are preferably used in combination. By using these solvents in combination, self-dispersing polymer particles free of aggregation sedimentation and fusion among particles, having a high dispersion stability and a fine particle size are obtainable.

The neutralizer is used to neutralize partially or wholly the dissociative group and to form a stable emulsion state or dispersion state of the self-dispersing polymer in water. When the self-dispersing polymer of the present invention has an anionic dissociative group (for example, a carboxy group) as the dissociative group, the neutralizer used herein may be exemplified by a basic compound such as an organic amine compound, ammonia, or an alkali metal hydroxide. Examples of the organic amine compound may include: monomethyl amine, dimethyl amine, trimethyl amine, monoethyl amine, diethyl amine, triethyl amine, monopropyl amine, dipropyl amine, monoethanol amine, diethanol amine, triethanol amine, N, N-dimethyl-ethanol amine, N, N-diethyl-ethanol amine, 2-dimethylamino-2-methyl-1-propanol, 2-amino-2-methyl-1-propanol, N-methyldiethanol amine, N-ethyldiethanol amine, monoisopropanol amine, diisopropanol amine, and triisopropanol amine. Examples of the alkali metal hydroxide may include: lithium hydroxide, sodium hydroxide, and potassium hydroxide. Among these, sodium hydroxide, potassium hydroxide, triethyl amine, and triethanol amine are preferable, from the viewpoint of dispersion stability of the self-dispersing polymer particles of the present invention in water.

These basic compounds are used in an amount of preferably from 5% by mol to 120% by mol with respect to 100% by mol of the dissociative group, more preferably from 10% by mol to 110% by mol, and even more preferably from 15% by mol to 100% by mol. When the amount is 15% by mol or more, an effect of stabilizing the particles in water is exerted. When the amount is 100% by mol or less, an effect of reducing the content of water-soluble components is exerted.

In Step (2), an aqueous dispersion of self-dispersing polymer particles may be obtained from the dispersion obtained in Step (1) by phase inversion into an aqueous system by distilling away the organic solvent in a usual manner such as vacuum distillation. The organic solvent in the resulting aqueous dispersion has been substantially removed, and the amount of the organic solvent therein is preferably 0.2% by mass or less, and more preferably 0.1 % by mass or less.

The weight-average molecular weight of the resin particles is preferably 10,000 to 200,000, and more preferably 100,000 to 200,000.
The average particle diameter of the resin particles is preferably in the range of 10 nm to 1 µm, more preferably in the range of 10 nm to 200 nm, even more preferably in the range of 20 nm to 100 nm, and further more preferably in the range of 20 nm to 50 nm.

The content of the resin particles is preferably 0.5% by mass to 20% by mass, more preferably 3% by mass to 20% by mass, and even more preferably 5% by mass to 15% by mass, with respect to the aqueous ink composition.
The glass transition temperature (Tg) of the resin particles is preferably 30°C or higher, more preferably 40°C or higher, and even more preferably 50°C or higher.
The particle diameter distribution of the resin particles is not particularly limited and may be a broad particle diameter distribution or a monodispersed particle diameter distribution. A mixture of two or more kinds of resin particles each having a monodispersed particle diameter distribution may also be used.

### -Surfactant-

The aqueous ink composition in the invention preferably contains at least one surfactant. The surfactant is used as a surface tension regulator. Examples of the surfactant include nonionic, cationic, anionic, and betaine surfactants.
In order to achieve good ink ejection in inkjet methods, the surfactant is preferably used in an amount such that the aqueous ink composition has a surface tension in a range of 20 mN/m to 60 mN/m. Further, the surfactant is preferably used in an amount such that the surface tension is from 20 mN/m to 45 mN/m, and more preferably in an amount such that the surface tension is from 25 mN/m to 40 mN/m.

Examples of effective surfactants may include compounds containing both a hydrophilic moiety and a hydrophobic moiety in a molecule thereof. The surfactant may also be anionic, cationic, amphoteric, or nonionic.

The content of the surfactant in the aqueous ink composition is not particularly limited, and is preferably 1% by mass or more, more preferably 1% by mass to 10% by mass, and even more preferably 1% by mass to 3% by mass.

### -Other components-

The aqueous ink composition in the invention may contain, in addition to the above-described components, if necessary, other components such as an ultraviolet absorber, an anti-fading agent, a fungicide, a rust preventive agent, an antioxidant, an emulsification stabilizer, an antiseptic agent, an anti-foaming agent, a viscosity regulator, a dispersion stabilizer, and a chelating agent.

### -Physical properties of aqueous ink composition-

The surface tension (at 25°C) of the aqueous ink composition in the invention is preferably 20 mN/m to 60 mN/m, more preferably 20 mN/m to 45 mN/m, and even more preferably 25 mN/m to 40 mN/m.
The surface tension is measured with an aqueous ink at 25°C using Automatic Surface Tensiometer CBVP-Z (trade name; manufactured by Kyowa Interface Science Co., Ltd.).

The aqueous ink composition in the invention preferably has a viscosity (at 20°C) of 1.2 mPa·s to 15.0 mPa·s, more preferably 2 mPa·s or more but less than 13 mPa·s, and even more preferably 2.5 mPa·s or more but less than 10 mPa·s.
The viscosity is measured with an aqueous ink at 20°C using VISCOMETER TV-22 (trade name; manufactured by Toki Sangyo Co., Ltd.).

The aqueous ink composition in the invention may be used for the formation of a multi-color image (for example, a full color image). For the formation of a full color image, a magenta color ink composition, a cyan color ink composition, and a yellow color ink composition may be used, and additionally an ink composition having a black color may be used to adjust the color tone.
In addition to the yellow (Y), magenta (M), and cyan (C) color ink compositions, other ink compositions such as those having a red (R), green (G), blue (B), or white (W) colors, or those having a so-called special color used in the printing field may be used.
The ink compositions having an intended color are prepared by changing as desired the color pigment used as the coloring agent.

### (Aqueous liquid composition)

The aqueous liquid composition in the inkjet recording ink set of the invention contains at least one acid as an aggregating component for aggregating the pigment in the aqueous ink composition when the aqueous liquid composition is mixed with the aqueous ink composition, and may further contain other components, if necessary.

### -Aggregating component-

The aqueous liquid composition in the invention contains at least one acid as an aggregating component for aggregating the pigment in the aqueous ink composition. The aqueous liquid composition is mixed with the aqueous ink composition ejected by an inkjet method, thereby promoting the aggregation of the pigment stably dispersed in the aqueous ink composition.

Examples of the aqueous liquid composition include a liquid composition which may change the pH of the aqueous ink composition, thereby forming an aggregate. In this case, the pH of the aqueous liquid composition (at 25°C) is preferably 6 or lower, and more preferably 4 or lower. In particular, the pH (at 25°C) is preferably from 1 to 4, and particularly preferably from 1 to 3. In this case, the pH of the aqueous ink composition (at 25°C) is preferably 7.5 or higher, and more preferably 8 or higher.
In the invention, from the viewpoints of image density, resolution, and speedup of inkjet recording, it is particularly preferable that the pH of the aqueous ink composition (at 25°C) be 7.5 or higher, and the pH of the aqueous liquid composition (at 25°C) be 4 or lower.

Examples of other aggregating component for aggregating the pigment include multivalent metal salts, organic acids, polyallylamines, and derivatives thereof, while it is necessary that the aqueous liquid composition contains an acid. The acid may be appropriately selected from polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumaric acid, thiophenecarboxylic acid, nicotinic acid, derivatives of these compounds, and salts of these compounds.

Examples of the multivalent metal salts may include salts of alkaline earth metals belonging to group 2 of the periodic table (for example, magnesium and calcium), transition metals belonging to group 3 of the periodic table (for example, lanthanum), cations of elements belonging to group 13 of the periodic table (for example, aluminum), or lanthanides (for example, neodymium). The salts of these metals include nitrates, chloride and thiocyanates.

The acid is preferably an organic carboxylic acid, more preferably a divalent or trivalent organic carboxylic acid, and particularly preferably any acid selected from the group consisting of a citric acid, a malonic acid, a malic acid and a maleic acid, from the viewpoint of improvement in aggregation speed of the pigment in the aqueous ink composition.

The aggregating components may be used alone or in a combination of two or more of them.
The content of the acid as the aggregating component for aggregating the pigment in the aqueous liquid composition is preferably in a range of 10% by mass to 35% by mass, more preferably in a range of 15% by mass to 35% by mass, and even more preferably in a range of 20% by mass to 35% by mass.

### <Image recording method>

The image recording method of the invention includes an ink application step of applying the aqueous ink composition in the invention, which contains a pigment coated with the water-insoluble resin of the invention, an organic solvent and water, onto a recording medium by an inkjet method, and an aggregating component application step of applying an aqueous liquid composition, which contains an acid as a component for aggregating the pigment in the aqueous ink composition, onto the recording medium, whereby the aqueous ink composition is brought into contact with the aqueous liquid composition to form an image.

In the image recording method of the invention, when an image is recorded through the aggregation caused by the contact between the aqueous ink composition and aqueous liquid composition at the time of recording, since the aqueous ink composition containing the pigment coated with the specific water-insoluble resin as a coloring material is used, the adhesion or deposition of aggregate on the liquid ejection portion formed by the contact between the two liquids is reduced, and the removal of the aggregate attached thereto is facilitated. As a result, directional failure of ink ejection is suppressed when the ink is ejected, and the occurrence of image defects such as white spots is prevented, whereby high resolution and high rub resistant image may be recorded. The decrease in the maintenance frequency of the ejection apparatus and improvement in the maintenance properties of the apparatus may also be achieved.

In the ink application step, the aqueous ink composition is applied by an inkjet method. More specifically, energy is applied thereby ejecting the aqueous ink composition onto a recording medium, for example, plain paper, resin coated paper, inkjet recording paper described in, for example, JP-A Nos. 8-169172, 8-27693, 2-276670, 7-276789, 9-323475, 62-238783, 10-153989, 10-217473, 10-235995, 10-337947, 10-217597, and 10-337947, film, electrophotographic paper, cloth, glass, metal, or ceramic to form a color image. The method described in the paragraphs 0093 to 0105 in JP-A No. 2003-306623 may be applied as a preferable inkjet recording method in the invention.

The inkjet method is not particularly limited, and may use a known system such as a charge controlling system of jetting ink using electrostatic attraction force, a drop-on-demand system (pressure pulse system) of using vibratory pressure of piezo elements, an acoustic inkjet system of jetting ink using the radiation pressure of the ink caused by acoustic beam converted from an electric signal, and a thermal inkjet (Bubble Jet (registered trademark)) system of using a pressure generated by bubbles formed in the ink by heating. The inkjet method described in JP-A No. 54-59936 may be effectively used in which heat energy is applied to an ink to thereby abruptly change the ink volume, and the working force exerted by the state change makes the ink ejected from a nozzle.
Other examples of the inkjet method include a system of jetting many droplets of a low concentration ink, which is referred to as photo ink, at a small volume, a system of improving the image quality using a plurality of inks having substantially the same color and different concentrations, and a system of using a colorless and transparent ink.

The inkjet heads used in the inkjet method may be of on-demand or continuous type. Specific examples of the ejection system may include, but not limited to, an electromechanical conversion system (for example, single cavity type, double cavity type, vender type, piston type, share mode type, and shared wall type), electrothermal conversion system (for example, thermal inkjet type and Bubble Jet (registered trademark) type), electrostatic suction system (for example, electric field control type and slit jet type), and electric discharge system (for example, spark jet type). Any of these ejection system may be used.
The ink nozzle and the like used for the inkjet recording are not particularly limited, and may be appropriately selected according to the intended use.

In the aggregating component application step, the aqueous liquid composition is applied onto the recording medium before or after the application of the aqueous ink composition. The application of the aqueous liquid composition may be performed by a known method such as a coating method, an inkjet method, or a dipping method. The application method may use a known means such as a bar coater, an extrusion die coater, an air doctor coater, a blade coater, a rod coater, a knife coater, a squeeze coater, a reverse roll coater, or a bar coater. The details about the inkjet method are the same as described above.

In the invention, it is preferable that the aggregating component application step of applying an aqueous liquid composition be followed by the ink application step. More specifically, according to a preferable embodiment of the invention, before the application of the aqueous ink composition, the aqueous liquid composition for aggregating the pigment in the aqueous ink composition is applied onto the recording medium, and then the aqueous ink composition is applied, thereby bringing the aqueous ink composition into contact with the aqueous liquid composition applied on the recording medium to form an image. As a result of this, speedup of inkjet recording is achieved, and an image having a high density and high resolution is produced even by high-speed recording.

In the recording of an image, a polymer or a polymer latex thereof may also be used to impart glossiness and water resistance, and to improve weather resistance. The polymer or the polymer latex may be applied before, after, or at the same time of the application of the aqueous ink composition. Therefore, the polymer or the polymer latex may be applied onto the recording medium, or used in another liquid state material.
Specific examples thereof may include those described in JP-A Nos. 2002-166638, 2002-121440, 2002-154201, 2002-144696, and 2002-080759.

The image recording method of the invention may further include other steps in addition to the ink application step of applying an aqueous ink composition and the aggregating component application step of applying an aqueous liquid composition. The other steps are not particularly limited, and may be appropriately selected according to the intended use. Examples of the other steps include a drying removal step of drying and removing the organic solvent in the aqueous ink composition applied on the recording medium, and a heat-fixing step of fusing and fixing the resin particles contained in the aqueous ink composition.

In another example of the image recording method of the invention, an intermediate transfer medium is used as a recording medium on which an image is to be formed, and the method includes an ink application step of applying an aqueous ink composition containing a pigment coated with the water-insoluble resin of the invention, an organic solvent, and water onto the intermediate transfer medium by an inkjet method, and an aggregating component application step of applying an aqueous liquid composition containing an acid as a component for aggregating the pigment in the aqueous ink composition onto the intermediate transfer medium, whereby the aqueous ink composition is brought into contact with the aqueous liquid composition to form an image on the intermediate transfer medium, and a transferring step of transferring the image formed on the intermediate transfer medium to a final recording medium.
The method may further include other steps such as a drying removal step and a heat-fixing step similar to the above-described method.
This application is intended to refer entire disclosure of Japanese Patent Application No. 2009-037982 filed on February 20, 2009, and to claim merit of the priority of it.

### EXAMPLES

The invention is further described with reference to the following examples, but the invention is not limited thereto. Unless otherwise noted, "part" indicates part by mass.

Note that, the weight-average molecular weight is measured by the method as described in the foregoing section of resin particles, using gel permeation chromatography (GPC).

### (Synthesis Example 1)

### <Synthesis of monomer mixture (M-25/M-27) >

In 30 parts of dimethyl sulfoxide, 9.76 parts of 9(10H)-acridone and 5.61 parts of potassium t-butoxide were dissolved, and heated at 45°C. A chloromethylstyrene mixture (CMS-P: trade name, manufactured by SEIMI CHEMICAL CO., LTD., para-form/meta-form = 50/50 (mol/mol)) in an amount of 15.26 parts was added droppwise to the resulting solution, which was further heated and agitated at 50°C for 5 hours. The resulting reaction solution was poured to 200 parts of distilled water while agitated. The resulting precipitate was filtered off and washed. In this way, 11.9 parts of a monomer mixture (M-25/M-27) were obtained.

### (Synthesis Example 2)

### -Synthesis of resin dispersant P-1-

88 g of methyl ethyl ketone was placed in a 1000-mL three-necked flask equipped with a stirrer and a cooling tube, and heated to 72°C in a nitrogen atmosphere. Into the flask, a solution prepared by dissolving 0.85 g of dimethyl 2,2'-azobisisobutyrate, 15 g of monomer mixture (M-25/M-27), 10 g of methacrylic acid, and 75 g of ethyl methacrylate in 50 g of methyl ethyl ketone was added dropwise over a period of 3 hours. After completion of the addition, the reaction was continued for further one hour, and then a solution prepared by dissolving 0.42 g of dimethyl 2,2'-azobisisobutyrate in 2 g of methyl ethyl ketone was added into the flask, and the solution was heated at 78°C for 4 hours. The reaction solution thus obtained was reprecipitated twice in an excess amount of hexane, and the precipitated resin was dried to obtain 96.5 g of a monomer mixture (M-25/M-27)/ethyl methacrylate/methacrylic acid (copolymerization ratio [% by mass] = 15/75/10) copolymer (resin dispersant P-1).
The composition of the resin dispersant P-1 thus obtained was confirmed by ¹H-NMR. Its weight average molecular weight (Mw) was 49400 as determined by GPC. The acid value of the polymer was 65.2 mgKOH/g as determined by the method described in Japanese Industrial Standard (JIS K 0070:1992).

### (Synthesis Example 3)

### -Synthesis of resin dispersant P-2-

88 g of methyl ethyl ketone was placed in a 1000-mL three-necked flask equipped with a stirrer and a cooling tube, and heated to 72°C in a nitrogen atmosphere. Into the flask, a solution prepared by dissolving 0.85 g of dimethyl 2,2'-azobisisobutyrate, 50 g of phenoxyethyl methacrylate, 13 g of methacrylic acid, and 37 g of methyl methacrylate in 50 g of methyl ethyl ketone was added dropwise over a period of 3 hours. After completion of the addition, the reaction was continued for further one hour, and then a solution prepared by dissolving 0.42 g of dimethyl 2,2'-azobisisobutyrate in 2 g of methyl ethyl ketone was added into the flask, and the solution was heated at 78°C for 4 hours. The reaction solution thus obtained was reprecipitated twice in an excess amount of hexane, and the precipitated resin was dried to obtain 96.5 g of a phenoxyethyl methacrylate/methyl methacrylate/methacrylic acid (copolymerization ratio [% by mass] = 67/20/13) copolymer (resin dispersant P-2).
The composition of the resin dispersant P-2 thus obtained was confirmed by ¹H-NMR. Its weight average molecular weight (Mw) was 49400 as determined by GPC. The acid value of the polymer was 84.8 mgKOH/g as determined by the method described in Japanese Industrial Standard (JIS K 0070:1992).

### (Synthesis Example 4)

### - Synthesis of resin dispersant P-3 -

A resin dispersant P-3 was obtained in a substantially similar manner to that in the synthesis of the resin dispersant P-1, except that the monomer mixture (M-25/M-27), ethyl methacrylate, and methacrylic acid that were used in the synthesis of the resin dispersant P-1 were replaced by benzyl methacrylate and methacrylic acid (copolymerization ratio (% by mass) = 92/8) as shown in the following Table 2.
The composition of the resulting resin dispersant P-3 was analyzed similarly to the above to obtain weight-average molecular weight and acid value. The results are shown in Table 2.

### (Example 1)

### - Preparation of dispersion of resin-coated pigment particles -

Pigment Red 122 (Cromophthal Jet magenta DMQ (trade name, manufactured by Chiba Specialty Chemicals Corp., Magenta pigment) in an amount of 10 parts, the above monomer mixture (M-25/M-27) /ethyl methacrylate/methacrylic acid copolymer (resin dispersant P-1) in an amount of 4.5 parts, methyl ethyl ketone in an amount of 42 parts, an NaOH aqueous solution in an amount of 4.2 parts, and ion-exchanged water in an amount of 87.2 parts were mixed, and the resulting mixture was subjected to mixing using a disper mill and further subjected to a 10 pass treatment with a disperser (Microfluidizer M-140K, 150 MPa). After that, methyl ethyl ketone was removed from the resulting dispersion under vacuum at 55°C, and part of the water was further removed to obtain a dispersion of resin-coated pigment particles with a pigment concentration of 10.2% by mass.

### -Particle diameter measurement of resin-coated pigment particles-

The dispersion of resin-coated pigment particles obtained was measured using a NANOTRAC particle size distribution analyzer UPA-EX150 (trade name; manufactured by Nikkiso Co., Ltd.) to determine the volume average particle diameter by a dynamic light scattering method. For the measurement, 10 mL of ion-exchanged water was added to 10 µL of the dispersion of resin-coated pigment particles to make a sample solution, and the temperature of the solution was adjusted to 25°C. The measurement results are shown in Table 1.

### [Preparation of Latex]

### (Preparation of self-dispersing polymer particles)

In a 2 L three-necked flask equipped with an agitator, a thermometer, a refluxing condenser tube, and a nitrogen gas introducing pipe, 360.0 g of methyl ethyl ketone were charged and the temperature thereof was elevated to 75°C. While the temperature inside of the reaction vessel was kept at 75°C, a mixed solution containing 180.0 g of phenoxyethyl acrylate, 162.0 g of methyl methacrylate, 18.0 g of acrylic acid, 72 g of methyl ethyl ketone, and 1.44g of "V-601" (trade name, manufactured by Wako Pure Chemical Industries, Ltd.) was added dropwise at a constant speed in a manner that the addition would be completed in 2 hours. After the addition was completed, a solution containing 0.72 g of "V-601" and 36.0 g of methyl ethyl ketone was added, then after 2 hour agitation at 75°C, a solution containing 0.72 g of "V-601" and 36.0 g of isopropanol was further added. After 2 hour agitation at 75°C, the temperature was elevated to 85°C, and agitation was still continued for 2 hours. The weight-average molecular weight (Mw) of the resulting copolymer was 64,000 (evaluated by gel permeation chromatography (GPC) in terms of polystyrene, using the columns of TSKgel Super HZM-H, TSKgel Super HZ4000, and TSKgel Super HZ200 (trade names, manufactured by TOSOH CORP.). The acid value thereof was 38.9 (mgKOH/g).
After that, 668.3 g of the resulting polymerization liquid were weighed out, 388.3 g of isopropanol and 145.7 mL of a 1 mol/L NaOH aqueous solution were added to the liquid, and the temperature inside of the reaction vessel was elevated to 80°C. Then, 720.1 g of distilled water were added dropwise at a rate of 20 mL/min so as to prepare an aqueous dispersion. The dispersion was kept under atmospheric pressure while the temperature inside of the reaction vessel was regulated at 80°C for 2 hours, at 85°C for additional 2 hours, and at 90°C for still additional 2 hours. The inside of the reaction vessel was depressurized so as to distill out isopropanol, methyl ethyl ketone, and distilled water in a total amount of 913.7 g and to obtain an aqueous dispersion (emulsion) of self-dispersing polymer particles (B-01) with a solid content of 28.0%.

### - Preparation of aqueous ink composition -

Next, an aqueous ink composition (aqueous ink) having the following composition was prepared using the resulting dispersion of resin-coated pigment particles. The pH of the aqueous ink was 8.9 at 25°C. The aqueous ink was aged for 3 months at 40°C.

### <Composition>

| | |
|---|---|
| • Dispersion of the resin-coated pigment particles | 38.2 parts |
| • Self-dispersing polymer particles (B-01) | 8 parts |
| • Sannix GP-250 (trade name, manufactured by Sanyo Chemical | |
| Industries, Ltd.) | 8parts |
| • Tripropylene glycol monomethyl ether | 8 parts |
| • Olfine E1010 (trade name, manufactured by Nissin Chemical | |
| Industry Co., Ltd. | 1 part |
| • Ion-exchanged water | 32.8 parts |

### - Preparation of aggregating solution -

Components with the following composition were mixed to prepare an aqueous aggregating solution (aqueous liquid composition).

### <Composition>

| | |
|---|---|
| • Maronic acid | 23.5 g |
| • Anionic surfactant A | 1 g |
| • Diethyleneglycol monoethyl ether | 20 g |
| • Ion-exchanged water | added in a manner that the total amount |
| | of the composition became 100 g. |

Note that, the anionic surfactant A is a compound represented by the following structural formula.

Anionic surfactant A

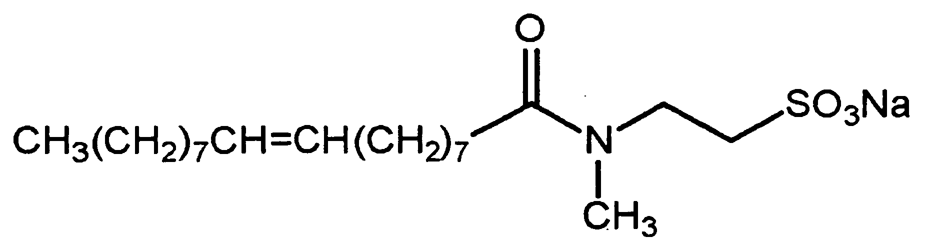

The physical properties of the above reaction liquid were measured to be 4.9 mPa·s of viscosity, 36.0 mN/m of surface tension, and 1.0 of pH.

As described above, an ink set of a magenta color aqueous ink and an aqueous aggregating solution was prepared.

### -Evaluation of ink set-

The ink set obtained as described above was loaded into an inkjet apparatus having prototype print heads each having 600 dpi and 256 nozzles, and rub resistance and white spots were evaluated by the following methods.

### - Evaluation of white spots -

"Tokubishi Art Paper double-sided N" (trade name, manufactured by Mitsubishi Paper Mills Limited) that served as a recording medium was fixed on a stage that was movable in a predetermined linear direction at a speed of 500 mm/sec. The aggregating solution obtained above was coated in a thickness of about 5 µm (0.84 g/m² of maronic acid) using a wire bar coater on the recording medium, and immediately after coating, dried at 50°C for 2 seconds.
After that, a solid image was printed using the prototype print heads. Immediately after printing, the image was dried at 60°C for 3 seconds, further passed between a pair of fixing rollers heated at 60°C so as to be fixed at a nip pressure of 0.25 MPa and a nip width of 4 mm. In this way, a test sample was obtained. Note that, the fixing rollers were composed of a heating roll having a silicone resin coating on the surface of a cored bar that was a SUS cylinder accommodating a halogen lump therein and a counter roll that was pushed against the heating roll. The resulting recorded image (5 cm × 5cm) was observed. The observed image was subjected to visual evaluation in accordance with the following evaluation criteria.

### <Evaluation Criteria>

A: no white spot is observed.
B: two or less white spots are observed.
C: three to ten white spots are observed.
D: more than ten white spots are observed.

### - Evaluation of rub resistance -

The solid image was wound around a paper weight (470 g of weight, 15 mm×30 mm × 120 mm in size) in a manner that the printed face directed toward outside. The test sample was rubbed back and forth three times on an unprinted Tokubishi Art Paper (equivalent to a load of 260 kg/m²). The printed face after rubbing was subjected to visual observation and evaluated in accordance with the following evaluation criteria.

### <Evaluation Criteria>

A: no stripping is observed on the image.
B: stripping is observed in two or less parts on the image.
C: stripping is observed in 3 to 10 parts on the image.
D: stripping is observed in over 10 parts on the image.

### (Examples 2 to 13, Comparative Examples 1 to 8)

In a manner substantially similar to that in Example 1, dispersions of resin-coated pigment particles were obtained, the particle sizes were measured, and aqueous inks and aggregating solutions were prepared and evaluated, except that in the monomer mixture (M-25/M-27) /ethyl methacrylate/methacrylic acid copolymer (resin dispersant P-1) used in the preparation of dispersion of the resin-coated pigment particles in Example 1, the kind of the resin dispersant and the amount of 1 N NaOH aqueous solution (neutralization degree of the resin dispersant) were changed, the pH of the aggregating solution was changed by appropriately adjusting the amount of acid, and the pH of the ink was changed by appropriately adjusting the amount of NaOH added to the self-dispersing polymer, as shown in the following Tables 1 and 2. The results of the measurement and evaluation are shown in the following Tables 1 and 2.

**[Table 1]**

| | | Water-insoluble resin | | | | pH of aqueous ink | pH of aggregating solution | Particle diameter of dispersed particles (nm) | White spot evaluation | Rub resistance evaluation |
|---|---|---|---|---|---|---|---|---|---|---|
| | | Polymer (% by mass) | Weight-average molecular weight | Acid value (mgKOH/g) | Neutralization degree | | | | | |
| Example 1 | P-1 | Monomer mixture (M-25/M-27) / ethyl methacrylate/ methacrylic acid copolymer (= 15/75/10) | 44500 | 65.2 | 80% | 8.9 | 1.0 | 82 | A | A |
| Example 2 | P-1 | same as above | 44500 | 65.2 | 95% | 9.1 | 1.0 | 81 | A | A |
| Example 3 | P-1 | same as above | 44500 | 65.2 | 70% | 8.7 | 1.0 | 81 | A | A |
| Example 4 | P-1 | same as above | 44500 | 65.2 | 90% | 9.0 | 1.0 | 81 | A | A |
| Example 5 | P-1 | same as above | 44500 | 65.2 | 75% | 8.8 | 1.0 | 81 | A | A |
| Example 6 | P-1 | same as above | 44500 | 65.2 | 80% | 8.0 | 1.0 | 81 | B | A |
| Comparative Example 1 | P-1 | same as above | 44500 | 65.2 | 80% | 7.0 | 1.0 | 81 | C | B |
| Example 7 | P-1 | same as above | 44500 | 65.2 | 80% | 8.9 | 3.5 | 81 | A | B |
| Comparative Example 2 | P-1 | same as above | 44500 | 65.2 | 80% | 8.9 | 4.5 | 81 | A | C |
| Comparative Example 3 | P-1 | same as above | 44500 | 65.2 | 50% | 8.3 | 1.0 | 90 | C | A |
| Comparative Example 4 | P-1 | same as above | 44500 | 65.2 | 110% | 9.3 | 1.0 | 80 | A | C |

**[Table 2]**

| | | Water-insoluble resin | | | | pH of aqueous ink | pH of aggregating solution | Particle diameter of dispersed pa rticles (nm) | White spot evaluation | Rub resistance evaluation |
|---|---|---|---|---|---|---|---|---|---|---|
| | | Polymer (% by mass) | Weight-average molecular weight | Acid value (mgKOH/g) | Neutrali-zation degree | | | | | |
| Example 8 | P-2 | Phenoxyethyl methacrylate/ methyl methacrylate/ methacrylic acid copolymer (= 67/20/13) | 49400 | 84.8 | 80% | 8.9 | 1.0 | 85 | A | A |
| Example 9 | P-2 | same as above | 49400 | 84.8 | 95% | 9.1 | 1.0 | 84 | A | A |
| Example 10 | P-2 | same as above | 49400 | 84.8 | 70% | 8.7 | 1.0 | 84 | A | A |
| Comparative Example 5 | P-2 | same as above | 49400 | 84.8 | 50% | 8.3 | 1.0 | 92 | C | A |
| Comparative Example 6 | P-2 | same as above | 49400 | 84.8 | 110% | 9.3 | 1.0 | 82 | A | C |
| Example 11 | P-3 | Benzyl methacrylate/ methacrylic acid copolymer(= 92/8) | 41200 | 52.2 | 80% | 8.9 | 1.0 | 85 | B | B |
| Example 12 | P-3 | same as above | 41200 | 52.2 | 95% | 9.1 | 1.0 | 84 | B | B |
| Example 13 | P-3 | same as above | 41200 | 52.2 | 70% | 8.7 | 1.0 | 84 | B | B |
| Comparative Example 7 | P-3 | same as above | 41200 | 52.2 | 50%. | 8.3 | 1.0 | 92 | C | B |
| Comparative Example 8 | P-3 | same as above | 41200 | 52.2 | 110% | 9.3 | 1.0 | 82 | B | C |

As shown in Tables 1 and 2, all of Comparative Examples have disadvantages in either rub resistance or white spots. On the other hand, in Examples that are configured in accordance with the present invention, both rub resistance and white spots are improved.

In the above-described Examples, a magenta color ink composition was prepared as the aqueous ink composition. However, the type (color) of the pigment to be used in the magenta color ink composition may be changed in the above-described procedure to obtain aqueous ink compositions having various colors such as a black color ink composition, a cyan color ink composition, and a yellow color ink composition. In addition, two or more aqueous color inks may be loaded into the inkjet apparatus in the above-described procedure to record a multi-color image, thus providing substantially the same results and effects as those described above.

According to the present invention, when recording is performed using an aged ink, an ink set for inkjet recording that is capable of realizing the formation of a high-resolution image having an excellent rub resistance and suppressing white spots from being developed, and an image recording method using the ink set are allowed to be provided.

The present invention may namely provide the following items <1> to <15>:
<1> An ink set for inkjet recording, including: an aqueous ink composition comprising a pigment, an organic solvent, and water, the pigment being coated with a water-insoluble resin which is a copolymer, the water-insoluble resin having a neutralization degree of from 70% to 95%, and the copolymer containing a repeating unit having an acid group; and an aqueous liquid composition comprising an acid, the acid aggregating the pigment in the aqueous ink composition when the aqueous liquid composition is mixed with the aqueous ink composition.
<2> The ink set for inkjet recording according to the item <1>, wherein the water-insoluble resin has an acid value of from 30 mgKOH/g to 100 mgKOH/g.
<3> The ink set for inkjet recording according to the item <1> or the item <2>, wherein the water-insoluble resin contains a hydrophilic structural unit (A) and a hydrophobic structural unit (B), at least one kind of the hydrophobic structural unit (B) is a structural unit containing an aromatic ring, and the hydrophilic structural unit (A) contains at least a structural unit derived from an acid group-containing monomer.
<4> The ink set for inkjet recording according to the item <3>, wherein the hydrophobic structural unit (B) comprises a repeating unit represented by the following Formula (1): 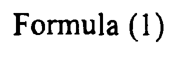 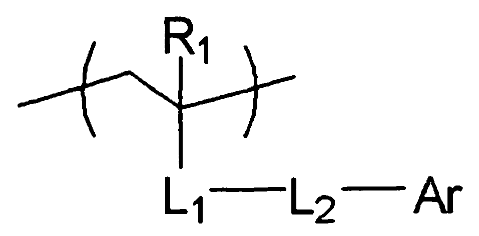 wherein, in Formula (1), R₁ represents a hydrogen atom or a methyl group; L₁ represents an unsubstituted or substituted phenylene group; L₂ represents a single bond or a divalent linking group; and Ar represents a monovalent group derived from a condensed aromatic ring having 8 or more carbon atoms, a heterocycle having an aromatic ring condensed therein, or two or more benzene rings linked to each other.
<5> The ink set for inkjet recording according to the item <3>, wherein the hydrophobic structural unit (B) comprises a repeating unit represented by the following Formula (I): 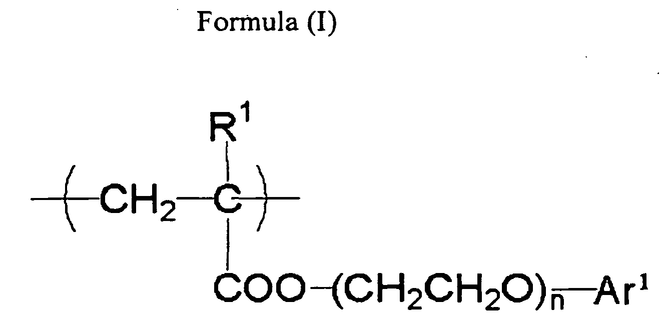 wherein, in Formula (I), R¹ represents a hydrogen atom or a methyl group; Ar¹ represents a monovalent group derived from an unsubstituted or substituted aromatic ring; and n represents an average repeating number and denotes an integer of 1 to 6.
<6> The ink set for inkjet recording according to any one of the items <3> to <5>, wherein the acid group-containing monomer is one selected from the group consisting of an unsaturated carboxylic acid monomer, an unsaturated sulfonic acid monomer, and an unsaturated phosphoric acid monomer.
<7> The ink set for inkjet recording according to any one of the items <3> to <5>, wherein the acid group-containing monomer is a (meth)acrylic acid.
<8> The ink set for inkjet recording according to any one of the items <1> to <7>, wherein the aqueous ink composition further includes resin particles.
<9> The ink set for inkjet recording according to the item <8>, wherein the resin particles are particles in a state of latex selected from the group consisting of acryl latex, vinylacetate latex, styrene latex, and polyester latex.
<10> The ink set for inkjet recording according to the item <8>, wherein the resin particles are particles in a state of acryl latex.
<11> The ink set for inkjet recording according to any one of the items <8> to <10>, wherein the resin particles are self-dispersing polymer particles.
<12> The ink set for inkjet recording according to any one of the items <1> to <11>, wherein the pH of the aqueous ink composition at 25°C is 7.5 or higher, and the pH of the aqueous liquid composition at 25°C is 4 or lower.
<13> The ink set for inkjet recording according to any one of the items <1> to <12>, wherein the aqueous liquid composition comprises an organic carboxylic acid that serves as the acid aggregating the pigment.
<14> An image recording method including: applying an aqueous ink composition on a recording medium by an inkjet recording process, the aqueous ink composition including a pigment, an organic solvent, and water, the pigment being coated with a water-insoluble resin which is a copolymer, the water-insoluble resin having a neutralization degree of from 70% to 95%, and the copolymer containing a repeating unit having an acid group; applying an aqueous liquid composition serving as an aggregating component on the recording medium, the aqueous liquid composition comprising an acid aggregating the pigment in the aqueous ink composition when the aqueous liquid composition is mixed with the aqueous ink composition; and forming an image by allowing the aqueous ink composition and the aqueous liquid composition to come in contact with each other.
<15> The image recording method according to the item <14>, wherein, after the aqueous liquid composition is applied, an image is formed by applying the aqueous ink composition in a manner such that the aqueous ink composition comes in contact with the aqueous liquid composition applied on the recording medium.

The foregoing description of the exemplary embodiments of the present invention has been provided for the purposes of illustration and description. It is not intended to be exhaustive or to limit the invention to the precise forms disclosed. The embodiments were chosen and described in order to best explain the principles of the invention and its practical applications, thereby enabling others skilled in the art to understand the invention for various embodiments and with the various modifications as are suited to the particular use contemplated. It will be obvious to those having skill in the art that many changes may be made in the above-described details of the preferred embodiments of the present invention. It is intended that the scope of the invention be defined by the following claims.

## Claims

1. An ink set for inkjet recording comprising:
an aqueous ink composition having a pH at 25°C of 7.5 or higher, and comprising an organic solvent, water and a pigment, the pigment being coated with a water-insoluble copolymer resin having a neutralization degree of from 70% to 95% and containing a repeating unit having an acid group; and
an aqueous liquid composition comprising an acid and having a pH at 25°C of from 1 to 3, the acid aggregating the pigment in the aqueous ink composition when the aqueous liquid composition is mixed with the aqueous ink composition;
wherein the water-insoluble resin comprises a repeating unit represented by the following Formula (1) or Formula (I): 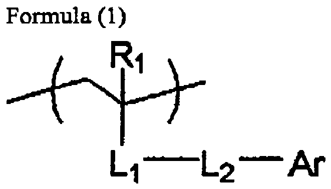 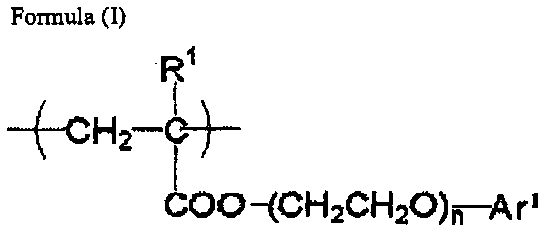
wherein, in Formula (1), R₁ represents a hydrogen atom or a methyl group; L₁ represents a phenylene group; L₂ represents a single bond or a divalent linking group; and Ar represents a monovalent group derived from any one ring selected from the group consisting of a condensed aromatic ring having 8 or more carbon atoms, a heterocycle having an aromatic ring condensed therein, and two or more benzene rings linked to each other; and
wherein, in Formula (I), R¹ represents a hydrogen atom or a methyl group; Ar¹ represents an aromatic ring; and n denotes an integer of 1 to 6.

2. The ink set for inkjet recording according to Claim 1, wherein the water-insoluble resin has an acid value of from 30 mgKOH/g to 100 mgKOH/g.

3. The ink set for inkjet recording according to Claim 1 or Claim 2, wherein the acid group-containing monomer is a (meth)acrylic acid.

4. The ink set for inkjet recording according to any one of Claims 1 to 3, wherein the aqueous ink composition further comprises resin particles.

5. The ink set for inkjet recording according to any one of Claims 1 to 4, wherein the aqueous liquid composition comprises an organic carboxylic acid that serves as the acid aggregating the pigment.

6. The ink set for inkjet recording according to any one of Claims 1 to 5, wherein the repeating unit represented by Formula (1) is formed from one of the monomers (1) to (6);

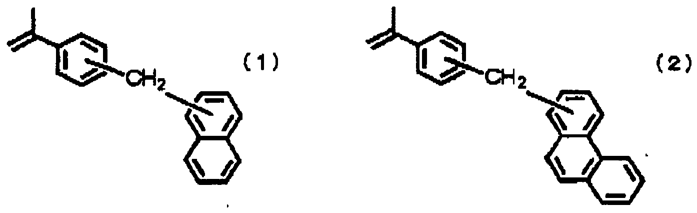

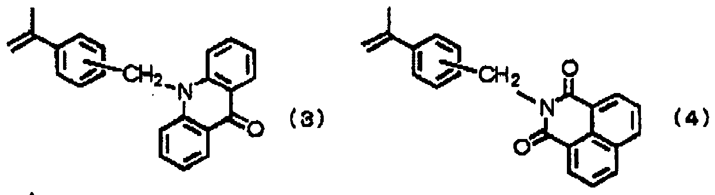

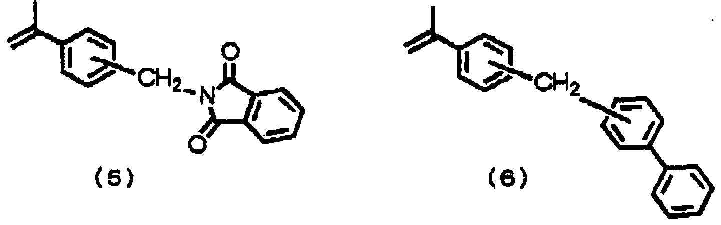

7. An image recording method comprising:
applying an aqueous ink composition on a recording medium by an inkjet recording process, the aqueous ink composition having a pH at 25°C of 7.5 or higher and comprising an organic solvent, water and a pigment, the pigment being coated with a water-insoluble copolymer resin having a neutralization degree of from 70% to 95% and containing a repeating unit having an acid group;
applying an aqueous liquid composition serving as an aggregating component on the recording medium, the aqueous liquid composition having a pH at 25°C of from 1 to 3 and comprising an acid that aggregates the pigment in the aqueous ink composition when the aqueous liquid composition is mixed with the aqueous ink composition; and
forming an image by allowing the aqueous ink composition and the aqueous liquid composition to come in contact with each other;
wherein the water-insoluble resin comprises a repeating unit represented by the following Formula (1) or Formula (I): 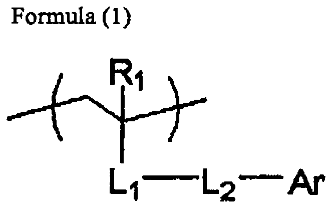 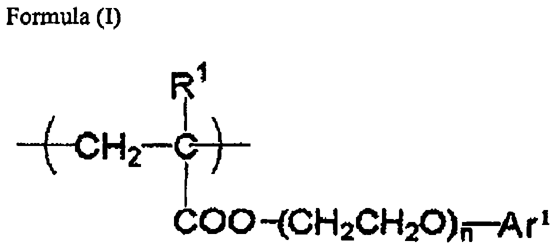
wherein, in Formula (1), R₁ represents a hydrogen atom or a methyl group; L₁ represents a phenylene group; L₂ represents a single bond or a divalent linking group; and Ar represents a monovalent group derived from any one ring selected from the group consisting of a condensed aromatic ring having 8 or more carbon atoms, a heterocycle having an aromatic ring condensed therein, and two or more benzene rings linked to each other; and
wherein, in Formula (1), R¹ represents a hydrogen atom or a methyl group; Ar¹ represents an aromatic ring; and n denotes an integer of 1 to 6.

8. The method according to Claim 7, wherein after the aqueous liquid composition is applied, an image is formed by applying the aqueous ink composition in a manner such that the aqueous ink composition comes in contact with the aqueous liquid composition applied on the recording medium.

9. The method according to Claim 7 or Claim 8, wherein the repeating unit represented by Formula (1) is formed from one of the monomers (1) to (6):

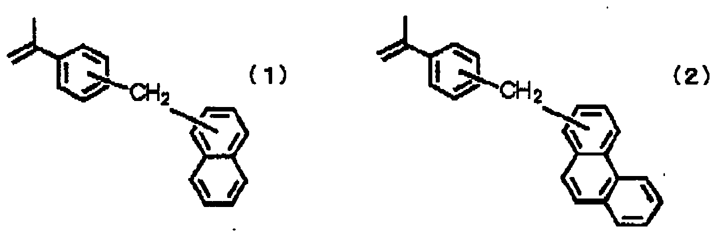

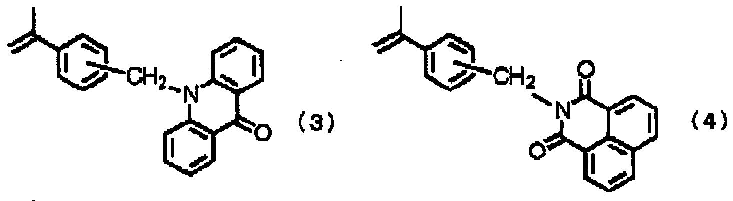

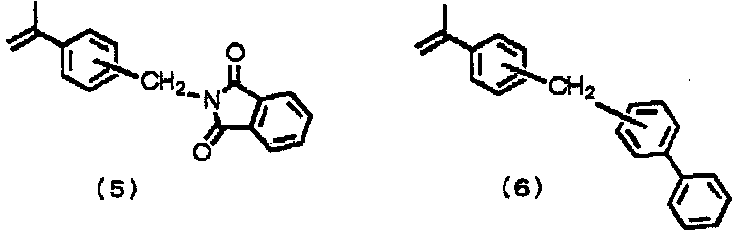

## Patentansprüche

1. Tintenset für die Tintenstrahlaufzeichnung, umfassend:
eine wässrige Tintenzusammensetzung mit einem pH-Wert bei 25 °C von 7,5 oder höher und umfassend ein organisches Lösungsmittel, Wasser und ein Pigment, wobei das Pigment mit einem wasserunlöslichen Copolymerharz beschichtet ist, das einen Neutralisationsgrad von 70 bis 95 % aufweist und eine Wiederholungseinheit, die eine Säuregruppe aufweist, enthält; und
eine wässrige, flüssige Zusammensetzung, die eine Säure umfasst und einen pH-Wert bei 25 °C von 1 bis 3 aufweist, wobei die Säure das Pigment in der wässrigen Tintenzusammensetzung aggregiert, wenn die wässrige, flüssige Zusammensetzung mit der wässrigen Tintenzusammensetzung vermischt wird;
worin das wasserunlösliche Harz eine durch die folgende Formel (1) oder Formel (I) dargestellte Wiederholungseinheit umfasst: 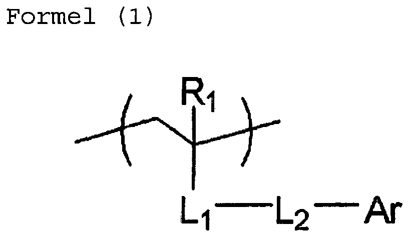 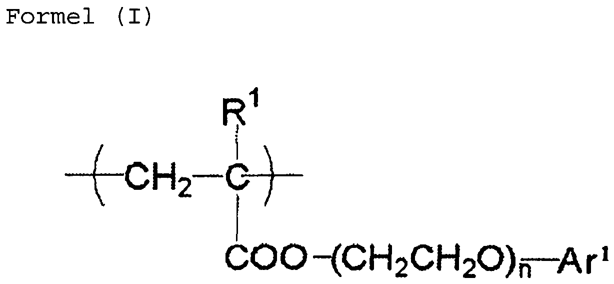
worin in der Formel (1) R₁ ein Wasserstoffatom oder eine Methylgruppe darstellt; L₁ eine Phenylengruppe darstellt; L₂ eine Einfachbindung oder eine divalente Verknüpfungsgruppe darstellt; und Ar eine monovalente Gruppe darstellt, die aus irgendeinem Ring abgeleitet ist, ausgewählt aus der Gruppe bestehend aus einem kondensierten aromatischen Ring mit 8 oder mehr Kohlenstoffatomen, einem Heterocyclus mit einem kondensierten aromatischen Ring hierin, und zwei oder mehr Benzolringen, die miteinander verknüpft sind; und
worin in der Formel (I) R₁ ein Wasserstoffatom oder eine Methylgruppe darstellt, Ar¹ einen aromatischen Ring darstellt; und n eine ganze Zahl von 1 bis 6 bezeichnet.

2. Tintenset für die Tintenstrahlaufzeichnung gemäß Anspruch 1, worin das wasserunlösliche Harz einen Säurewert von 30 mgKOH/g bis 100 mgKOH/g aufweist.

3. Tintenset für die Tintenstrahlaufzeichnung gemäß Anspruch 1 oder Anspruch 2, worin das Säuregruppenenthaltende Monomer eine (Meth)acrylsäure ist.

4. Tintenset für die Tintenstrahlaufzeichnung gemäß irgendeinem der Ansprüche 1 bis 3, worin die wässrige Tintenzusammensetzung ferner Harzpartikel umfasst.

5. Tintenset für die Tintenstrahlaufzeichnung gemäß irgendeinem der Ansprüche 1 bis 4, worin die wässrige, flüssige Zusammensetzung eine organische Carbonsäure umfasst, die als Säure dient, welche das Pigment aggregiert.

6. Tintenset für die Tintenstrahlaufzeichnung gemäß irgendeinem der Ansprüche 1 bis 5, worin die durch die Formel (1) dargestellte Wiederholungseinheit aus einem der Monomere (1) bis (6) gebildet wird:

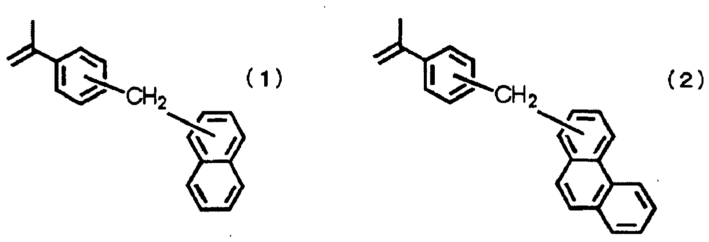

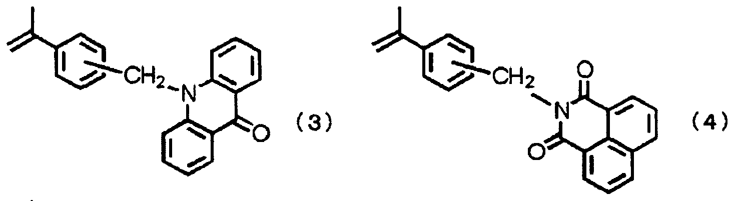

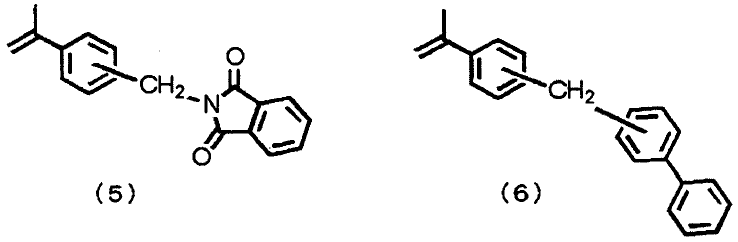

7. Verfahren zur Bildaufzeichnung, umfassend:
Auftragen einer wässrigen Tintenzusammensetzung auf ein Aufzeichnungsmedium mit einem Tintenstrahl-Aufzeichnungsprozess, worin die wässrige Tintenzusammensetzung einen pH-Wert bei 25 °C von 7,5 oder höher aufweist und ein organisches Lösungsmittel, Wasser und ein Pigment umfasst, worin das Pigment mit einem wasserunlöslichen Copolymerharz beschichtet ist, das einen Neutralisationsgrad von 70 bis 95 % aufweist und eine Wiederholungseinheit, die eine Säuregruppe aufweist, enthält;
Auftragen einer wässrigen, flüssigen Zusammensetzung, die als aggregierende Komponente dient, auf das Aufzeichnungsmedium, worin die wässrige, flüssige Zusammensetzung einen pH-Wert bei 25 °C von 1 bis 3 aufweist und eine Säure umfasst, die das Pigment in der wässrigen Tintenzusammensetzung aggregiert, wenn die wässrige, flüssige Zusammensetzung mit der wässrigen Tintenzusammensetzung vermischt wird; und
Erzeugen eines Bildes, indem die wässrige Tintenzusammensetzung und die wässrige, flüssige Zusammensetzung miteinander in Kontakt gebracht werden;
worin das wasserunlösliche Harz eine durch die folgende Formel (1) oder Formel (I) dargestellte Wiederholungseinheit umfasst: 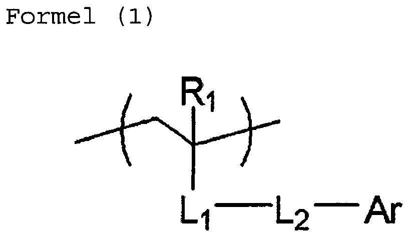 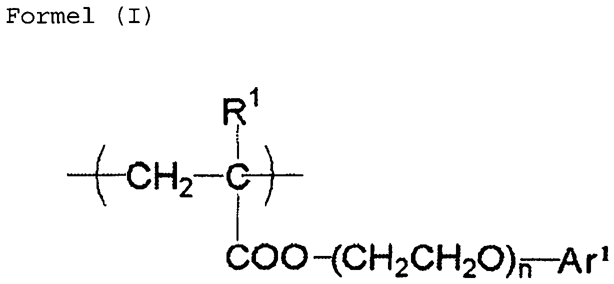
worin in der Formel (1) R₁ ein Wasserstoffatom oder eine Methylgruppe darstellt; L₁ eine Phenylengruppe darstellt; L₂ eine Einfachbindung oder eine divalente Verknüpfungsgruppe darstellt; und Ar eine monovalente Gruppe darstellt, die aus irgendeinem Ring abgeleitet ist, ausgewählt aus der Gruppe bestehend aus einem kondensierten aromatischen Ring mit 8 oder mehr Kohlenstoffatomen, einem Heterocyclus mit einem kondensierten aromatischen Ring hierin, und zwei oder mehr Benzolringen, die miteinander verknüpft sind; und
worin in der Formel (I) R₁ ein Wasserstoffatom oder eine Methylgruppe darstellt, Ar¹ einen aromatischen Ring darstellt; und n eine ganze Zahl von 1 bis 6 bezeichnet.

8. Verfahren gemäß Anspruch 7, worin nach dem Auftragen der wässrigen, flüssigen Zusammensetzung ein Bild erzeugt wird, indem die wässrige Tintenzusammensetzung so aufgetragen wird, dass die wässrige Tintenzusammensetzung in Kontakt mit der wässrigen, flüssigen Zusammensetzung kommt, die auf das Aufzeichnungsmedium aufgetragen ist.

9. Verfahren gemäß Anspruch 7 oder Anspruch 8, worin die durch die Formel (1) dargestellte Wiederholungseinheit aus irgendeinem der Monomere (1) bis (6) gebildet wird:

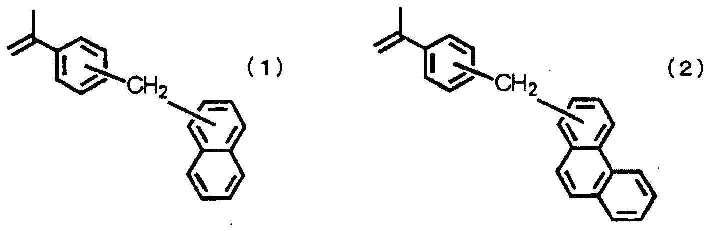

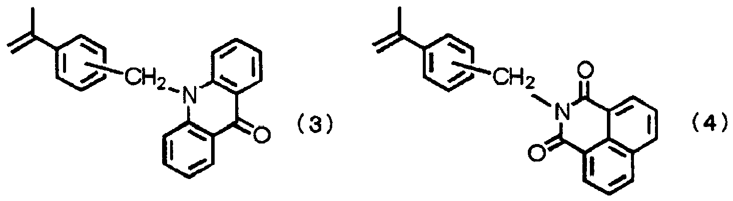

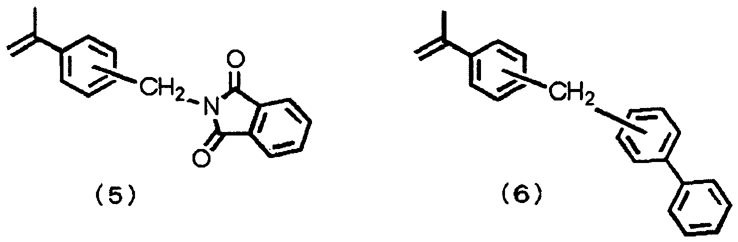

## Revendications

1. Jeu d'encre pour enregistrement par jet d'encre comprenant :
une composition d'encre aqueuse présentant un pH à 25°C de 7,5 ou supérieur, et comprenant un solvant organique, de l'eau et un pigment, le pigment étant revêtu avec une résine copolymère insoluble dans l'eau présentant un degré de neutralisation de 70 % à 95 % et contenant une unité répétitive présentant un groupe acide ; et
une composition liquide aqueuse comprenant un acide et présentant un pH à 25°C de 1 à 3, l'acide agrégant le pigment dans la composition d'encre aqueuse lorsque la composition liquide aqueuse est mélangée avec la composition d'encre aqueuse ;
dans lequel la résine insoluble dans l'eau comprend une unité répétitive représentée par la formule (1) ou la formule (I) suivantes : 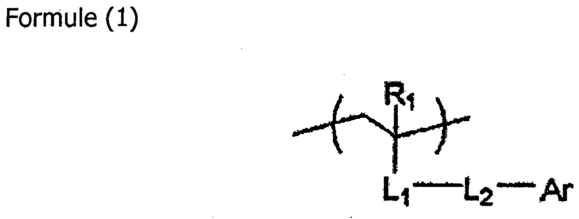 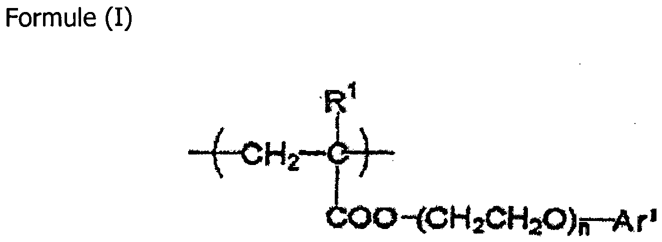
où, dans la formule (1), R₁ représente un atome d'hydrogène ou un groupe méthyle ; L₁ représente un groupe phénylène ; L₂ représente une liaison simple ou un groupe de liaison divalent ; et Ar représente un groupe monovalent dérivé d'un cycle choisi dans le groupe constitué d'un cycle aromatique condensé présentant 8 atomes de carbone ou plus, d'un hétérocycle présentant un cycle aromatique condensé dans celui-ci, et de deux cycles benzène ou plus liés les uns aux autres ; et
où, dans la formule (I), R¹ représente un atome d'hydrogène ou un groupe méthyle ; Ar¹ représente un cycle aromatique ; et n indique un nombre entier de 1 à 6.

2. Jeu d'encre pour enregistrement par jet d'encre selon la revendication 1, dans lequel la résine insoluble dans l'eau présente un indice acide de 30 mg de KOH/g à 100 mg de KOH/g.

3. Jeu d'encre pour enregistrement par jet d'encre selon la revendication 1 ou la revendication 2, dans lequel le monomère contenant un groupe acide est un acide (méth)acrylique.

4. Jeu d'encre pour enregistrement par jet d'encre selon l'une quelconque des revendications 1 à 3, dans lequel la composition d'encre aqueuse comprend de plus des particules de résine.

5. Jeu d'encre pour enregistrement par jet d'encre selon l'une quelconque des revendications 1 à 4, dans lequel la composition liquide aqueuse comprend un acide carboxylique organique qui sert comme l'acide agrégant le pigment.

6. Jeu d'encre pour enregistrement par jet d'encre selon l'une quelconque des revendications 1 à 5, dans lequel l'unité répétitive représentée par la formule (1) est formée d'un des monomères (1) à (6) :

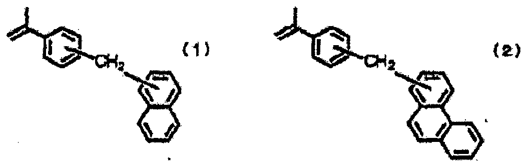

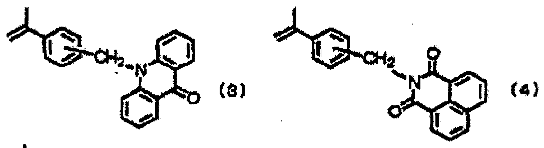

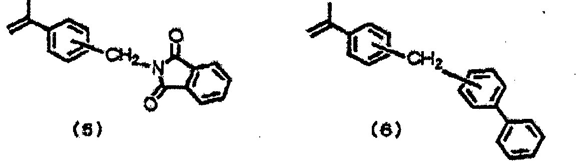

7. Procédé d'enregistrement d'image comprenant :
l'application d'une composition d'encre aqueuse sur un support d'enregistrement par un procédé d'enregistrement par jet d'encre, la composition d'encre aqueuse présentant un pH à 25°C de 7,5 ou supérieur et comprenant un solvant organique, de l'eau et un pigment, le pigment étant revêtu avec une résine copolymère insoluble dans l'eau présentant un degré de neutralisation de 70 % à 95 % et contenant une unité répétitive présentant un groupe acide ;
l'application d'une composition liquide aqueuse servant comme un constituant d'agrégation sur le support d'enregistrement, la composition liquide aqueuse présentant un pH à 25°C de 1 à 3 et comprenant un acide qui agrège le pigment dans la composition d'encre aqueuse lorsque la composition liquide aqueuse est mélangée avec la composition d'encre aqueuse ; et
la formation d'une image en laissant la composition d'encre aqueuse et la composition liquide aqueuse être en contact l'une avec l'autre ;
dans lequel la résine insoluble dans l'eau comprend une unité répétitive représentée par la formule (1) et la formule (I) suivantes : 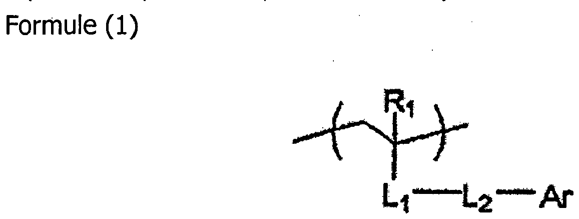 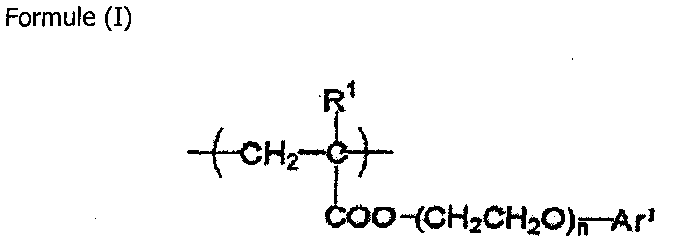
où, dans la formule (1), R₁ représente un atome d'hydrogène ou un groupe méthyle ; L₁ représente un groupe phénylène ; L₂ représente une liaison simple ou un groupe de liaison divalent ; et Ar représente un groupe monovalent dérivé d'un cycle choisi dans le groupe constitué d'un cycle aromatique condensé présentant 8 atomes de carbone ou plus, d'un hétérocycle présentant un cycle aromatique condensé dans celui-ci, et de deux cycles benzène ou plus liés les uns aux autres ; et
où, dans la formule (I), R¹ représente un atome d'hydrogène ou un groupe méthyle ; Ar¹ représente un cycle aromatique ; et n indique un nombre entier de 1 à 6.

8. Procédé selon la revendication 7, dans lequel, après que la composition liquide aqueuse est appliquée, une image est formée par application de la composition d'encre aqueuse de sorte que la composition d'encre aqueuse est en contact avec la composition liquide aqueuse appliquée sur le support d'enregistrement.

9. Procédé selon la revendication 7 ou la revendication 8, dans lequel l'unité répétitive représentée par la formule (1) est formée d'un des monomères (1) à (6) :
